# EUROPEAN PATENT APPLICATION

(11) **EP 4 738 052 A1**
(43) Date of publication of application: **06.05.2026**
(21) Application number: 24897858.7
(22) Date of filing: 07.10.2024
(51) Int. Cl.: G06F 1/16

(54) **HINGE STRUCTURE AND FOLDABLE ELECTRONIC DEVICE COMPRISING SAME**

(30) Priority: 29.11.2023 KR 20230169499; 12.12.2023 KR 20230179508
(71) Applicant: Samsung Electronics Co., Ltd., Suwon-si, Gyeonggi-do 16677 (KR)
(72) Inventor: KANG, Jaeho, Suwon-si, Gyeonggi-do 16677 (KR); KIM, Jongkeun, Suwon-si, Gyeonggi-do 16677 (KR); BAIK, Jinwook, Suwon-si, Gyeonggi-do 16677 (KR); HAN, Yonghwa, Suwon-si, Gyeonggi-do 16677 (KR)
(74) Representative: Appleyard Lees IP LLP
(86) International application number: PCT/KR2024/015188
(87) International publication number: WO 2025/116259

(57) **Abstract**

The hinge structure includes a first rotation member that is rotated around a first axis, a first arm member that is rotated in response to rotation of the first rotation member, a second rotation member that is rotated around a second axis, a second arm member that is rotated in response to rotation of the second rotation member, and a first link member that is fastened to the first rotation member and the first arm member, the first rotation member includes a first rail that is formed on a first side surface of the first rotation member and a first rail groove that is disposed in an opposite direction to the first side surface of the first rotation member, and the first rail protrudes from a surface of the first side surface and the first rail groove is formed to be recessed from a surface of the second side surface.

## Description

### BACKGROUND

### 1. Field

Various embodiments of the disclosure relate to a foldable electronic device including a hinge structure.

### 2. Description of Related Art

A portable electronic device, such as a smartphone, may support call functions and various content search functions based on various types of applications. The portable electronic device may output an image corresponding to each function in a process of providing various functions. When the user uses the above-described various functions, the user may want to use a wider screen. In general, when a display device is to be expanded for screen display in a portable electronic device, the overall size of the electronic device has to be increased, which may deteriorate portability. Accordingly, a foldable portable electronic device, in which a display is folded to increase the size of the screen while maintaining portability has been provided. Such a foldable portable electronic device can have folded and unfolded states.

An electronic device having a hinge structure may include a plurality of housings which may support respective areas of a display in an unfolded state, and a hinge structure which interconnects the plurality of housings. The hinge structure may support connecting the plurality of housings and allowing them to be held at a specific angle while the plurality of housings are in a folded or unfolded state.

The information may be provided as related art to help understanding the disclosure. None of the above may be claimed as a prior art related to the disclosure or used to determine the prior art.

### SUMMARY

A foldable electronic device (or a portable electronic device, a portable communication device, a foldable electronic device, or a foldable electronic device having a communication function) may include a hinge structure including a first rotation member which is rotated around a first axis, a first arm member which is rotated in response to rotation of the first rotation member, a second rotation member which is rotated around a second axis, a second arm member which is rotated in response to rotation of the second rotation member, and a first link member which is fastened to the first rotation member and the first arm member, where the first rotation member includes a first rail protrusion which is formed on a first side surface of the first rotation member and a first rail groove which is disposed in an opposite direction to the first side surface of the first rotation member, and where the first rail protrusion protrudes from a surface of the first side surface and the first rail groove is formed to be recessed from a surface of the second side surface, a first housing and a second housing which are operated in a hinged manner by the hinge structure.

### BRIEF DESCRIPTION OF THE DRAWINGS

FIGS. 1A to 1C are perspective views variously illustrating unfolded and folded states of a foldable electronic device according to various embodiments;
FIG. 2 is an exploded perspective view illustrating a foldable electronic device in an unfolded state according to various embodiments;
FIG. 3 is a rear plan view illustrating a first-type hinge structure of a foldable electronic device according to an embodiment;
FIG. 4 is a front plan view illustrating a first-type hinge structure according to an embodiment;
FIG. 5 is a perspective view illustrating a first link member, a first arm member, and a first rotation member according to an embodiment;
FIG. 6 is a perspective view illustrating a first link member according to an embodiment;
FIG. 7 is a perspective view illustrating a first disposition state of a first rotation member according to an embodiment;
FIG. 8 is a perspective view illustrating a second disposition state of a first rotation member according to an embodiment;
FIG. 9 is a perspective view illustrating a first disposition state of a first arm member according to an embodiment;
FIG. 10 is a perspective view illustrating a second disposition state of a first arm member according to an embodiment;
FIGS. 11A and 11B are a top plan view and a perspective view of a first link cover according to an embodiment;
FIG. 12 is a top plan view illustrating an upper surface of a first-type hinge structure according to an embodiment;
FIG. 13 is a side view illustrating a side surface of a first-type hinge structure according to an embodiment;
FIG. 14 is an exploded perspective view illustrating the first-type hinge structure of FIG. 12;
FIG. 15A is a top plan view and FIG. 15B is a cross-sectional view along line 15A'-15A FIG. 15A, of a first-type hinge structure according to an embodiment;
FIG. 16 is a top plan view illustrating a second-type hinge structure according to an embodiment;
FIG. 17A is a top plan view and FIGS. 17B and 17C are perspective views illustrating a third link cover and a fourth link cover of a second-type hinge structure according to an embodiment;
FIG. 18A is a top plan view and FIG. 18B is a cross-sectional view along line 19A1'-19A1 of FIG. 18A of a second-type hinge structure according to an embodiment;
FIG. 19A is a top plan view and FIG. 19B is a cross-sectional view along line 19A2'-19A2 of FIG. 19A of a second-type hinge structure according to an embodiment;
FIG. 20 is a top plan view illustrating a third-type hinge structure according to an embodiment;
FIG. 21 is a perspective view illustrating a third rotation member according to an embodiment;
FIG. 22A is a top plan view and FIG. 22B is a cross-sectional view along line 22A'-22A of FIG. 22A of one side of a third-type hinge structure according to an embodiment;
FIG. 23 is an exploded perspective view illustrating a fourth-type hinge structure according to an embodiment; and
FIG. 24 is a cross-sectional view illustrating a fourth-type hinge structure according to an embodiment, taken along line 23A-23A' in FIG. 23.

### DETAILED DESCRIPTION

Hereinafter, various embodiments of the disclosure may be described with reference to accompanying drawings.

Hereinafter, in various embodiments of the disclosure, various structures included in a hinge structure may be moved due to gaps therebetween while a portable electronic device is operated in a folded or unfolded state. The movement may cause inconvenience to a user, and may deteriorate a lifespan of the portable electronic device. In various embodiments of the disclosure, by improving the above-described movement, the portable electronic device may be helped to perform a more stable hinge operation. As an example, at least some of various embodiments of the disclosure propose a device which may reduce gaps of structures which cause movement, or support a more robust hinge operation by reducing movement of structures which are rotated. The portable electronic device may include a portable electronic device, such as a smartphone, a tablet, a notebook computer, a slate PC, or a laptop computer, and may support a call function and various content providing functions based on various types of applications.

The foldable electronic device including the hinge structure according to an embodiment, which will be described below, has a dumbbell-type folding structure (or a folding structure, in which a folding area of the display has a water-droplet shape and spacing angles between the housings are constantly maintained), and the foldable electronic device is helped to be folded at parallel gaps. Hereinafter, the hinge structure of the disclosure may be helped to perform an improved hinge operation due to improved gaps.

In addition, various purposes and effects provided by the foldable electronic device including an improved hinge structure according to various embodiments may be mentioned according to embodiments of the detailed description.

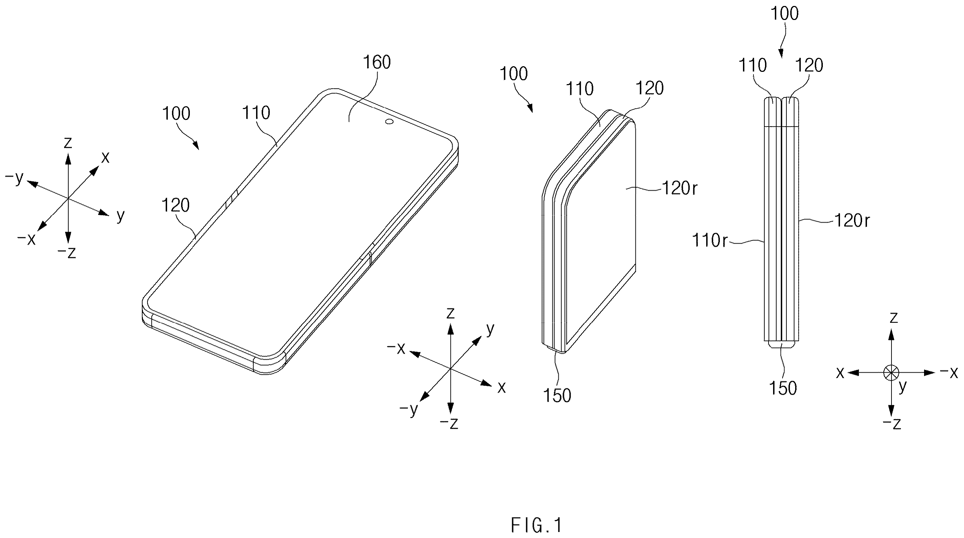

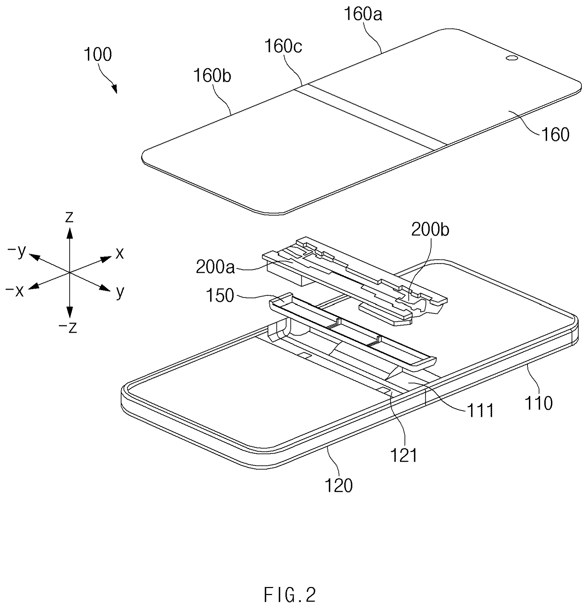

FIGS. 1A to 1C are views illustrating an example of a perspective view of unfolded and folded states of a foldable electronic device according to various embodiments, and FIG. 2 is a view illustrating an example of an exploded perspective view of some components of a foldable electronic device in an unfolded state according to various embodiments. As used hereafter, "FIG. 1" may refer to one or more among FIGS. 1A to 1C.

Referring to FIGS. 1 and 2, a foldable electronic device 100 (or an electronic device, a portable electronic device, a portable communication device, or a foldable communication device) according to an embodiment may include housings (or a housing) including a first housing 110 (or a first housing part) and a second housing 120 (or a second housing part), a display 160 (e.g., a flexible display), and a hinge housing 150, in which a hinge structure 200a and 200b (or a hinge structure, a hinge assembly, or a gear assembly) is disposed on an inner side thereof. FIG. 1 is a perspective view of the foldable electronic device 100 in a flat state (or in an unfolding state or an unfolded state) and a perspective view in a folded state, and FIG. 2 is a perspective view illustrating an exploded state of some components of the foldable electronic device 100 in the unfolded state. Additionally or alternatively, the foldable electronic device 100 may further include a first cover 110r which covers a rear part of the first housing 110 and a second cover 120r which covers a rear part of the second housing 120. Alternatively, a separate auxiliary display may be further disposed in at least one of a rear part of the first housing 110 and a rear part of the second housing 120.

According to various embodiments, the first housing 110 may be disposed continuous to the second housing 120 depending on a disposition state thereof (e.g., when a central portion 160c of the display 160 is unfolded flatly or when the housings are in an unfolded state), or may be disposed in parallel to the second housing 120. Alternatively, when the central portion 160c of the display 160 is folded, one surface of the first housing 110 may be disposed to face one surface of the second housing 120.

The first housing 110 may be, for example, at least partly formed of a metallic material, or at least partly formed of a non-metallic material. For example, the first housing 110 may be formed of a material having a specific rigidity to support at least a portion of the display 160. At least a portion of a front surface of the first housing 110 may have one area of the display 160 (e.g., an upper portion 160a of the display 160 (or one area in an x-axis direction or a first area) and a portion of a central portion 160c) disposed thereon. At least a portion of the first housing 110 may be adhered to an upper portion 160a of the display 160. Alternatively, at least a portion of a periphery of a front surface of the first housing 110 (e.g., one surface which faces a z-axis direction or one surface in a direction which faces a front surface of the display 160) may surround a periphery of an upper portion 160a of the display 160, and may be adhered to at least a portion of the upper portion 160a of the display 160. Alternatively, one side of an upper portion of a front surface of the first housing 110 may be adhered to one side of an upper portion 160a of the display 160. In this regard, an adhesive layer (or an adhesive material or an adhesive tape) may be disposed at least a portion between the first housing 110 and an upper portion 160a of the display 160. At least a portion inside the first housing 110 may be provided in a hollow form, or may be provided in a hollow form while being coupled to the first cover, so that electronic elements (e.g., at least one of a printed circuit board, at least one processor disposed on the printed circuit board, at least one memory, or a battery) which are necessary for driving the display 160 may be disposed.

According to various embodiments, ends of peripheries of the first housing 110 (e.g., ends of the remaining three peripheries except for a periphery which faces the second housing 120) may protrude from a bottom surface of a central portion of the housing by a designated height to surround at least one side periphery of the display 160. Alternatively, sidewalls, at least some of which face a periphery of the display 160, may be disposed at at least a portion of an end of a periphery of the first housing 110. The sidewalls formed at at least some of peripheries of the first housing 110 may be formed at the remaining three peripheries except for a periphery which faces the second housing 120 while having a designated height. At least a portion of a peripheral portion of the first housing 110, which faces the second housing 120, may include a recessed portion having a specific curvature such that at least a portion of the hinge housing 150 and at least a portion of the hinge structures 200a and 200b disposed (or located or seated) on the hinge housing 150 may be disposed therein. For example, the first housing 110 may include a first stepped portion 111 (or a first curved portion) at a peripheral portion which faces the second housing 120, on which at least a portion of the first hinge structure 200a and the second hinge structure 200b is disposed (or located or seated).

According to various embodiments, the second housing 120 may be disposed parallel to the first housing 110, or at least one surface thereof may be disposed to face one surface (e.g., a surface on which the display 160 is disposed) of the first housing 110, depending on a disposition thereof. The second housing 120 may be provided of the same material as that of the first housing 110. For example, at least a portion of the second housing 120 may be formed of a metallic material, and at least a remaining portion may be formed of a non-metallic material (e.g., an injection-molded product). Because the second housing 120 is disposed to be symmetrical to the first housing 110 leftward and rightward or upward and downward, it may be disposed on a front surface thereof to support at least a portion (e.g., a lower portion 160b of the display 160 (or a second area in a -x-axis direction) and an opposite side of the central portion 160c) of a remaining area of the display 160, other than an area disposed in the first housing 110. At least a portion of the second housing 120 may be adhered to a lower portion 160b of the display 160. Alternatively, a periphery of a front surface of the second housing 120 may be adhered to a periphery of a lower portion 160b of the display 160. Alternatively, one side of a lower portion of a front surface of the second housing 120 may be adhered to one side of a lower portion 160b of the display 160. In this regard, an adhesive layer may be disposed at at least a portion between the second housing 120 and the lower portion 160b of the display 160. At least a portion of an inside of the second housing 120 may be provided in a hollow form similarly to the first housing 110, or may be provided in a hollow form while being coupled to the second cover 120r such that an electronic device which is necessary for driving the display 160 is disposed therein.

According to various embodiments, ends of peripheries of the second housing 120 (e.g., ends of the remaining three peripheries except for a periphery which faces the first housing 110) may protrude from a bottom surface of a central portion of the second housing 120 by a designated height to surround an opposite side periphery of the display 160. Alternatively, sidewalls, at least some of which face a periphery of the display 160, similarly to the sidewalls formed in the first housing 110, may be disposed at at least a portion of an end of a peripheral end of the second housing 120. The sidewalls formed at at least some of peripheries of the second housing 120 may be formed at the remaining three peripheries except for a periphery which faces the first housing 110 while having a designated height.

At least a portion of a portion of the second housing 120, which faces the first housing 110, may include a recessed portion having a specific curvature such that the hinge housing 150 and the hinge structure 200 and 200b, at least a portion of which is disposed (or located or seated) on the hinge housing 150 may be disposed therein. For example, the second housing 120 may include a second stepped portion 121 (or a second curved portion) at a peripheral portion which faces the first housing 110, on which at least a portion of the first hinge structure 200a and the second hinge structure 200b is disposed (or located or seated).

According to various embodiments, the foldable electronic device 100 may include at least one sensor which is disposed on one side of the first housing 110 or the second housing 120, and is related to operating a specific function of the foldable electronic device 100. The sensor may include, for example, at least one of a proximity sensor, an illuminance sensor, an iris sensor, an image sensor (or a camera), or a fingerprint sensor.

According to various embodiments, the hinge housing 150 may be covered by one side of the first housing 110 and the second housing 120 (e.g., the unfolded state of the housings), or may be exposed to the outside (e.g., the folded state of the housings), depending on the folded state or the unfolded state of the foldable electronic device 100. For example, as illustrated in FIG. 1, when the first housing 110 and the second housing 120 are disposed in parallel (or when the housings 110 and 120 are in the unfolded state), the hinge housing 150 may be covered by the first housing 110 and the second housing 120. When one surface of the first housing 110 and one surface of the second housing 120 are disposed to face each other (or when the housings 110 and 120 are in the folded state), at least a portion of the hinge housing 150 may be disposed to be exposed to the outside at side peripheries (e.g., peripheries, at which the first housing 110 and the second housing 120 face each other in the unfolded state).

According to various embodiments, at least a portion of the display 160 may be provided to be flexible. According to an embodiment, the display 160 may include an upper portion 160a or a first area which is disposed on the first housing 110, a lower portion 160b or a second area which is disposed on the second housing 120, and a central portion 160c or a central area, in which the first housing 110 and the second housing 120 are adjacent to each other. According to various embodiments, the entire display 160 may be flexible. Alternatively, at least a portion of the central portion 160c of the display 160 may be provided to be flexible. The central portion 160c of the display 160 may be disposed such that the first housing 110 and the second housing 120 are not adhered to each other. For example, the central portion 160c of the display 160 may be disposed to be spaced apart by a specific distance from front surfaces of the first housing 110 and the second housing 120. The upper portion 160a of the display 160 may be adhered to at least a portion of the first housing 110, and the lower portion 160b of the display 160 may be adhered to at least a portion of the second housing 120. In this regard, an adhesive layer may be disposed in at least a partial area between the display 160 and the first housing 110, and an adhesive layer (an adhesive layer which is disposed at a different position from the adhesive layer which contacts at least a portion of the first upper portion 160a of the display 160 and the first housing 110) may be disposed in at least a partial area between the display 160 and the second housing 120. The adhesive layer disposed on the first housing 110 and the adhesive layer disposed on the second housing 120 may be disposed only at peripheries of the first housing 110 and the second housing 120.

According to various embodiments, the hinge structures 200a and 200b may include a first hinge structure 200a and a second hinge structure 200b. In the illustrated drawings, a state in which the first hinge structure 200a and the second hinge structure 200b are disposed in the hinge housing 150 is illustrated, but the disclosure is not limited thereto, and, as necessary, three or more hinge structures may be disposed on the hinge housing 150.

The first hinge structure 200a may be disposed at one side of the hinge housing 150 (e.g., at a -y-axis periphery with respect to a longitudinal center line of the foldable electronic device illustrated in the drawing). The first hinge structure 200a may be coupled to one side of the first housing 110 and the second housing 120 (e.g., a left side with respect to a longitudinal center line of a foldable electronic device (e.g., an imaginary line which crosses a center of the display 160 while connecting the -x axis and the x axis)), and may be rotated within a specific range with respect to a transverse axis (e.g., the y axis or the -y axis) of the hinge housing 150. The first hinge structure 200a may be disposed to be symmetrical to the second hinge structure 200b with respect to a central portion of the hinge housing 150.

The second hinge structure 200b may be disposed at an opposite side of the hinge housing 150 (e.g., at a right side with respect to a longitudinal center line of the foldable electronic device illustrated in the drawing). The second hinge structure 200b may be coupled to an opposite side of the first housing 110 (e.g., a right side with respect to a longitudinal center line of the foldable electronic device (e.g., an imaginary line which crosses a center of the display 160 while connecting the -x axis and the x axis)) and an opposite side of the second housing 120 (e.g., a right side with respect to the longitudinal center line of the foldable electronic device), and may be rotated within a specific range with respect to a transverse axis (or a folding axis) of the hinge housing 150. The second hinge structure 200b may be disposed to be symmetrical to the first hinge structure 200a with respect to a central portion of the hinge housing 150. The second hinge structure 200b may include the same structure and configuration as those of the first hinge structure 200a, but its disposition position may be different. At least one of the first and second hinge structures 200a and 200b may include a structure having an improved gap.

According to an embodiment, the foldable electronic device 100 may include wing plates 131 and 132 which are disposed to be positioned on at least one hinge structure 200a or 200b, or coupled to at least one hinge structure 200a or 200b, to cover at least one surface of the at least one hinge structure 200a or 200b in a z-axis direction when the foldable electronic device 100 is in the unfolded state. The wing plates 131 and 132 may be provided in a form in which they are separated from the housings 110 and 120. Accordingly, a gap may be formed between the wing plates 131 and 132 and the housings 110 and 120. According to various embodiments, the housings 110 and 120 may be provided with grooves in which the wing plates 131 and 132 may be disposed (or fastened, coupled, or seated). The wing plates 131 and 132 may be disposed to correspond to at least a portion of a lower surface (e.g., a surface in the -z-axis direction or a surface in a direction which faces a rear surface of the display 160) of a third area 160c (or a central portion) of the display 160. The wing plates 131 and 132 are rotated clockwise or counterclockwise in response to a hinge operation of at least one hinge structure 200a or 200b. For example, the second wing plate 132 may be rotated clockwise while the first wing plate 131 is rotated counterclockwise, and the second wing plate 132 may be rotated counterclockwise while the first wing plate 131 is rotated clockwise. The first wing plate 131 may support a flat first surface of the third area 160c of the display 160, which is folded in a dumbbell shape, and the second wing plate 132 may support a flat second surface (a surface which is symmetrical to the first surface with respect to the z-axis) of the third area 160c of the display 160, which is folded in a dumbbell shape.

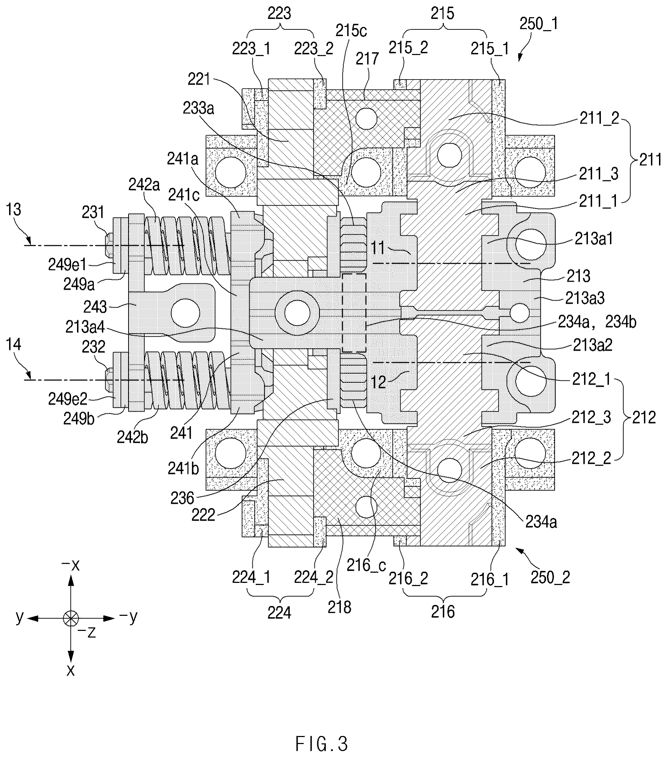

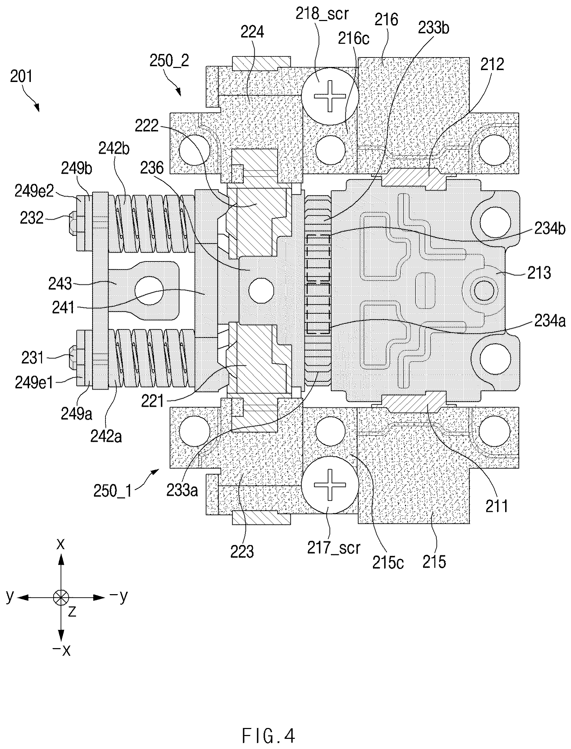

FIG. 3 is a front view illustrating an example of a first-type hinge structure of a foldable electronic device according to an embodiment, and FIG. 4 is a rear view illustrating a first-type hinge structure according to an embodiment. In FIGS. 3 and 4, among the hinge structures 200a and 200b described with reference to FIGS. 1 and 2, the first hinge structure 200a will be described with reference number 201 assigned thereto. The configuration of the first-type hinge structure 201 described with reference to FIGS. 3 and 4 may have the same or a similar structure and configuration as those of the first hinge structure 200a and the second hinge structure 200b described above.

Referring to FIGS. 1 to 4, the first-type hinge structure 201 may include a fixing bracket 213, a first rotation member 211 (or a first rotation structure, a first rotation part, or a first rotation body) which is rotated around a first axis 11 (e.g., an imaginary axis in a y-axis direction which is different from a center of a first shaft 231), a second rotation member 212 (or a second rotation structure, a second rotation part, or a second rotation body) which is rotated around a second axis 12 (or a second imaginary axis which is different from a second shaft 232 and is formed in parallel to the first axis 11), a first arm member 221 (or a first arm part or a first arm structure) which is rotated around a center of the first shaft 231 (or a first center axis of the first shaft or a third axis 13), a second arm member 222 (or a second arm part or a second arm structure) which is rotated around a center of the second shaft 232 (or a second center axis of the second shaft or a fourth axis 14), a first link part 215 which fixes (or couples) the first rotation member 211 to the first housing 110 and supports rotation (or sliding) of the first rotation member 211, a third link part 216 which fixes (or couples) the second rotation member 212 to the second housing 120 and supports rotation (or sliding) of the second rotation member 212, a second link part 223 which fixes the first arm member 221 to the first housing 110 and supports rotation (or sliding) of the first arm member 221, and a fourth link part 224 which fixes the second arm member 222 to the second housing 120 and supports rotation (or sliding) of the second arm member 222. At least some of the components of the above-described first-type hinge structure 201 (e.g., at least some of the first to fourth link parts 215, 223, 216, and 224) may be omitted. For example, when the first rotation member 211 and the second rotation member 212 are directly coupled to the housings 110 and 120, the first link part 215 and the third link part 216 may be omitted, and when the arm members 221 and 222 are directly coupled to the housings 110 and 120 without passing via the link parts 223 and 224, the second link part 223 and the fourth link part 224 may be omitted.

Additionally or alternatively, the first-type hinge structure 201 may include at least one of a first main gear 233a which is formed (or disposed) on the first shaft 231, a second main gear 233b which is formed (or disposed) on the second shaft 232, at least one idle gear 234a or 234b which is disposed between the first main gear 233a and the second main gear 233b, a stopper 236 which is used to fix the first main gear 233a, the second main gear 233b, and the at least one idle gear 234a or 234b, and prevents the first arm member 221 and the second arm member 222 from being rotated by a designated angle or more, a shaft fixing part 243 which is used to fix the first shaft 231 and the second shaft 232, a cam member 241 which is cam-coupled to cam structures (e.g., a first cam structure of the first arm member 221 and a second cam structure of the second arm member 222) formed in the first arm member 221 and the second arm member 222, a first elastic member 242a (or an elastic body) and a second elastic member 242b which provide elasticity to the cam member 241, and at least one of a plurality of coupling means 249e1 and 249e2 (or fixing clips) and washer rings 249a and 249b. The cam member 241 may include a first fixed cam part 241a which is cam-coupled to a first cam structure formed at a portion of the first arm member 221, a second fixed cam part 241b which is cam-coupled to a second cam structure formed at a portion of the second arm member 222, and a cam connecting part 241c which connects the first fixed cam part 241a and the second fixed cam part 241b.

Portions or the entirety of some of the components of the above-described first-type hinge structure 201 may be formed of a metal material and be configured to have a specific rigidity. Alternatively, as necessary, at least a portion of the first-type hinge structure 201 may have a reinforced plastic or resin material. According to various embodiments, at least a portion of the above-described first-type hinge structure 201 may be omitted or modified. For example, the gears and the stopper 236 may be omitted. Furthermore, at least some of the washer rings 249a and 249b may be omitted. Alternatively, a specific structure or configuration may be integrated or incorporated into another structure or configuration. For example, at least some of the link parts 215, 223, 216, and 224 may be integrated. As an example, the first link part 215 and the second link part 223 may be integrated. The third link part 216 and the fourth link part 224 may be integrated. As an example of the disclosure, a structure, in which the first link part 215 and the second link part 223 are combined with each other to form a first link member 250_1, and the third link part 216 and the fourth link part 224 are combined with each other to form a second link member 250_2, will be described. However, an embodiment of the disclosure is not limited thereto, and the above-described link parts 215, 223, 216, and 224 may be provided in independently separated forms, and may also be provided while being integrated with the housings 110 and 120. For example, the first link part 215 and the second link part 223 may be integrated with the first housing 110. The third link part 216 and the fourth link part 224 may be integrated with the second housing 120.

At least a portion of a shape of a lower surface (e.g., a surface in the -z-axis direction) of the fixing bracket 213 may include a curved surface. For example, at least a portion of a lower surface of the fixing bracket 213 may be formed to correspond to an inner shape of the hinge housing 150. The fixing bracket 213 may include a fixing bracket body 213a3, of which at least a portion of an upper surface (e.g., a surface in the z-axis direction) has a flat shape fixing rail grooves 213a1 and 213a2 which are formed at one side of the fixing bracket body 213a3 and to which the rotation members 211 and 212 are coupled, and a bracket extension part 213a4 which is disposed to cover at least a portion of the gears (e.g., 233a, 233b, 234a, and 234b) and is disposed to cover at least a portion of the first arm member 221 and the second arm member 222. According to an embodiment, the fixing bracket 213 may include an arc shape in at least a portion of a cross-section from an upper surface (e.g., a surface in a z-axis direction) toward a lower surface (e.g., a surface in a -z-axis direction). A portion (e.g., at least a portion of a first rail structure 211_1, among the first rail structure 211_1 and the second rail structure 211_2 which constitute the first rotation member 211) of the first rotation member 211 may be inserted into the first fixing rail groove 213a1 in a second direction (e.g., the x-axis direction) from a first direction (e.g., the -x-axis direction). A portion (e.g., at least a portion of a third rail structure 212_1, among the third rail structure 212_1 and the fourth rail structure 212_2 which constitute the second rotation member 212) of the second rotation member 212 may be inserted into the second fixing rail groove 213a2 in the first direction (e.g., the -x-axis direction) from the second direction (e.g., the x-axis direction). With respect to the first axis 11 or the second axis 12 (or with respect to an arbitrary axis which crosses a center between the first rotation member 211 and the second rotation member 212), the first fixing rail groove 213a1 may be formed to be biased in the -x-axis direction compared to the second fixing rail groove 213a2, and the second fixing rail groove 213a2 may be formed to be biased in the x-axis direction compared to the first fixing rail groove 213a1. he first rail structure 211_1 of the first rotation member 211, at least a portion of which is inserted into the first fixing rail groove 213a1, may be rotated around the first axis 11, and the third rail structure 212_1 of the second rotation member 212, at least a portion of which is inserted into the second fixing rail groove 213a2, may be rotated around the second axis 12. The first axis 11 and the second axis 12 may be formed above (air) an upper surface (e.g., a surface in the z-axis direction) of the fixing bracket 213. Alternatively, the first axis 11 and the second axis 12 may be formed between an upper surface of the display 160 and a lower surface (e.g., a surface in the -z-axis direction) of the upper fixing bracket 213b.

According to an embodiment, the first axis 11 and the second axis 12 may be spaced apart from each other by a specific interval. According to various embodiments, an interval between the first axis 11 and the second axis 12 may be formed to be smaller than an interval between the first shaft 231 and the second shaft 232 (or an interval between a third axis 13 formed at a center of the first shaft 231 and a fourth axis 14 formed at a center of the second shaft 232). According to various embodiments, the first axis 11 and the second axis 12 may be formed above the first shaft 231 and the second shaft 232 with respect to the z-axis. Alternatively, the first axis 11 and the second axis 12 may be formed closer to an upper surface of the display 160 than the first shaft 231 and the second shaft 232 with respect to the z-axis. According to various embodiments, the fixing bracket body 213a3 may include at least one fixing hole which is used to fix the fixing bracket 213 to the hinge housing 150. The fixing bracket body 213a3 may be fixed to the hinge housing 150 through at least one coupling member. As an example, the foldable electronic device 100 may fix the fixing bracket 213 to the hinge housing 150 by using a coupling member (e.g., a screw, a rivet, or welding).

The first rotation member 211 may include a first rotation body 211_3, a first rail structure 211_1, and a second rail structure 211_2. The first rotation body 211_3 may be disposed between the first rail structure 211_1 and the second rail structure 211_2 having a rail shape. As an example, the first rail structure 211_1 and the second rail structure 211_2 may be formed flat with respect to the first rotation body 211_3, or may be formed to have a stepped shape. The first rail structure 211_1 of the first rotation member 211 may be fastened to one side (e.g., the first fixing rail groove 213a1) of the fixing bracket 213 to be hinged. The second rail structure 211_2 of the first rotation member 211 may be coupled to one side of the first link part 215 to perform sliding (or rotation or arc motion) in response to a hinge operation (or rotation or sliding) of the first rail structure 211_1. The first rotation member 211 may be separated not to be adhered or fixed to the first link part 215 to perform sliding (or rotation) with respect to the first link part 215. In this process, a gap may be formed between the first rotation member 211 and the first link part 215, and rotation of the first rotation member 211 may become irregular due to the gap, or a specific portion during rotation may receive a higher pressure than other portions. In this regard, an embodiment of the disclosure may provide a structure, in which a protrusion of a rail and a groove are engaged with each other in a fastening structure of the first rotation member 211 and the first link part 215. Additionally or alternatively, in an embodiment of the disclosure, by providing a link cover (or a link cover structure) which may press at least a portion of the first rotation member 211 fastened to the first link part 215, a gap between the first rotation member 211 and the first link part 215 (or a gap between a rail protrusion of the first rotation member 211 and a rail groove of the first link part 215) may be reduced, or a gap between the first rotation member 211 and the first link part 215 may be helped to be maintained constantly. The improved form of the disclosure may also be applied to the second rotation member 212 and the third link part 216 in the same way.

While the first link part 215 coupled to the first housing 110 is moved in response to (e.g., together with) a movement of the first housing 110, the first rail structure 211_1 of the first rotation member 211, which is fastened to the fixing bracket 213, may perform an in-place rotational motion around the first axis 11. As an example, the second rail structure 211_2 of the first rotation member 211 may perform rotation at a specific angle (or sliding) in the first link part 215 (or by using the first link part 215) while being moved in one direction (e.g., counterclockwise while the foldable electronic device 100 is folded from the unfolded state, or clockwise while the foldable electronic device 100 is unfolded from the folded state). At least a portion of the first wing plate 131, among the wing plates 131 and 132, may be fixed to the first rotation member 211. In this regard, the first rotation body 211_3 may include at least one hole or recess to be coupled to the first wing plate 131. The first rail structure 211_1 which is inserted into the first fixing rail groove may include two symmetrical curved rails. The second rail structure 211_2 which is coupled to the first link part 215 may include curved rails which are not symmetrical to each other or have different shapes.

According to an embodiment, the second rotation member 212 may include a part (e.g., a third rail structure 212_1) which is fastened to an opposite side of the fixing bracket 213 (e.g., a second fixing rail groove 213a2) and then coupled to be hinged, a part (e.g., a fourth rail structure 212_2) which is coupled to the third link part 216, and a second rotation body 212_3 which is disposed between the third rail structure 212_1 and the fourth rail structure 212_2. Portions of upper surfaces of the third rail structure 212_1 and the fourth rail structure 212_2 with respect to the second rotation body 212_3 may be formed flat or may be formed to be stepped. While the third link part 216 coupled to the second housing 120 is moved in response to a movement of the second housing 120, the third rail structure 212_1 of the second rotation member 212, which is fastened to the fixing bracket 213, may perform an in-place rotational motion around the second axis 12. As an example, the fourth rail structure 212_2, of which at least a portion is coupled to the third link part 216, may perform rotation at a specific angle (or sliding) in the third link part 216 (or by using the third link part 216) while being moved in one direction (e.g., counterclockwise while the foldable electronic device 100 is folded from the unfolded state, or clockwise while the foldable electronic device 100 is unfolded from the folded state). The third rail structure 212_1 may include a rail structure which is similar to or the same as the first rail structure 211_1. The fourth rail structure 212_2, which is coupled to the third link part 216, may perform rotation at a specific angle (or sliding) in the third link part 216 (or by using the third link part 216) while being moved in one direction (e.g., counterclockwise while the foldable electronic device 100 is folded from the unfolded state, or clockwise while the foldable electronic device 100 is unfolded from the folded state). In this regard, the third link part 216 may include a rail protrusion (or rail wing) and a rail groove, in which an empty space is formed at a central portion thereof similar to the first link part 215 and which include curved surfaces disposed on opposite sides.

According to an embodiment, the second rotation member 212 may generate friction with the fixing bracket 213 and the third link part 216 while hinge operations are repeatedly performed similar to the first rotation member 211, and may be formed of a material (e.g., a metal material) having a specific strength or more which may withstand the friction. For example, the second rotation member 212 may be formed of the same material as that of the first rotation member 211. At least a portion of the second wing plate 132, among the wing plates 131 and 132, may be fixed to the second rotation member 212. In this regard, the second rotation body 212_3 may include at least one hole or recess to be coupled to the second wing plate 132. The second rotation member 212 may be moved in an opposite direction to the first rotation member 211. For example, while the first rail structure 211_1 of the first rotation member 211 is rotated in place counterclockwise, the third rail structure 212_1 of the second rotation member 212 may be rotated in place clockwise. The fourth rail structure 212_2 may have a structure which is the same as or similar to that of the second rail structure 211_2 described above. As an example, the same structure (or pattern) (e.g., a rail or a rail protrusion) may be disposed on opposite side surfaces of the third rail structure 212_1. The fourth rail structure 212_2 may include different structures (e.g., a rail protrusion formed on one side surface and a rail groove formed on an opposite side surface) on opposite side surfaces thereof.

While the foldable electronic device 100 is folded, the first rail structure 211_1 of the first rotation member 211 may be rotated counterclockwise, and the first link part 215 inserted into the second rail structure 211_2 may be slid clockwise along the second rail structure 211_2 (the sliding is relative, and thus, the first link part 215 may be slid clockwise with respect to the second rail structure 211_2). While the foldable electronic device 100 is folded, the third rail structure 212_1 of the second rotation member 212 may be rotated clockwise along the second fixing rail groove 213a2 of the fixing bracket 213, and the third link part 216 inserted into the fourth rail structure 212_2 may be slid counterclockwise (the sliding is relative, and thus, the third link part 216 may be slid clockwise with respect to the fourth rail structure 212_2).

According to an embodiment, the first link part 215 may include a structure which is coupled and fixed to one side of the first housing 110. The first link part 215 may include at least an eleventh link sidewall 215_1 (or a first sidewall of the first link part 215) and a second link sidewall 215_2 (or a second sidewall of the first link part 215). The first link part 215 may include a structure (e.g., an eleventh link sidewall 215_1 and a twelfth link sidewall 215_2), in which a portion of the first rotation member 211 (e.g., a second rail structure 211_2) is disposed (or fastened or coupled). A rail protrusion (or a rail groove) which protrudes toward the twelfth link sidewall 215_2 may be formed in the eleventh link sidewall 215_1, and a rail groove (or a protruding rail protrusion) which is directed toward the eleventh link sidewall 215_1 may be formed in the twelfth link sidewall 215_2. The rail groove and the rail protrusion may be fastened to the second rail structure 211_2. In correspondence to the fact that shapes of structures formed in the first link part 215 are formed opposite to each other, shapes of structures formed in the second rail structure 211_2 coupled to the first link part 215 may be formed opposite to each other.

According to an embodiment, the second link part 223 may include a structure, in which a portion of the first arm member 221 is disposed (or fastened, coupled, or seated). The second link part 223 may include at least a twenty-first link sidewall 223_1 and a twenty-second link sidewall 223_2. A rail protrusion (or a rail groove) which protrudes toward the twenty-second link sidewall 223_2 may be formed in the twenty-first link sidewall 223_1, and a rail groove (or a protruding rail protrusion) which is formed toward the twenty-first link sidewall 223_1 may be disposed in the twenty-second link sidewall 223_2. The rail groove and the rail protrusion may be fastened to one side of the first arm member 221. A structure (e.g., at least one hole or recess) which is used to fix the second link part 223 to the first housing 110 may be formed in the twenty-first link sidewall 223_1 and the twenty-second link sidewall 223_2. An empty space may be formed between the twenty-first link sidewall 223_1 and the twenty-second link sidewall 223_2, and a portion of the first arm member 221 may be seated in the empty space so that sliding of the first arm member 221 may be guided.

According to an embodiment, the third link part 216 may include a structure which is coupled and fixed to one side of the second housing 120. The third link part 216 may include at least a thirty-first link sidewall 216_1 and a thirty-second link sidewall 216_2. The third link part 216 may include a structure (e.g., a thirty-first link sidewall 216_1 and a thirty-second link sidewall 216_2), in which a portion (e.g., a fourth rail structure 212_2) of the second rotation member 212 is disposed (or fastened, coupled, or seated). A rail protrusion (or a rail groove) which protrudes toward the thirty-second link sidewall 216_2 may be formed in the thirty-first link sidewall 216_1, and a rail groove (or a protruding rail protrusion) which is directed toward the thirty-first link sidewall 216_1 may be formed in the thirty-second link sidewall 216_2. The rail groove and the rail protrusion may be fastened to the fourth rail structure 212_2. In this regard, a protrusion structure formed in the fourth rail structure 212_2 may be provided to be left-right asymmetrical to be inserted into the rail groove and the rail protrusion. The above-described third link part 216 may be disposed to be symmetrical to the first link part 215 with respect to the y-axis direction. The third link part 216 may be disposed parallel to the fourth link part 224 in the y-axis direction.

According to an embodiment, the fourth link part 224 may include a structure, in which a portion of the second arm member 222 is disposed (or fastened, coupled, or seated). In this regard, the fourth link part 224 may include at least a forty-first link sidewall 224_1 and a forty-second link sidewall 224_2. A rail protrusion (or a rail groove) which protrudes toward the forty-second link sidewall 224_2 may be formed in the forty-first link sidewall 224_1, and a rail groove (or a protruding rail protrusion) which is directed toward the forty-first link sidewall 224_1 may be formed in the forty-second link sidewall 224_2. The rail groove and the rail protrusion may be fastened to a portion of the second arm member 222. A structure (e.g., at least one hole or recess) which is used to fix the fourth link part 224 to the second housing 120 may be formed in the forty-first link sidewall 224_1 and the forty-second link sidewall 224_2. An empty space may be formed between the forty-first link sidewall 224_1 and the forty-second link sidewall 224_2, and the empty space may be used to guide the second arm member 222 while one side of the second arm member 222 is slid.

According to an embodiment, the first link member 250_1 may include a first link part 215, a second link part 223, a first link connecting part 215c, and a first link cover 217 (or a first cover or a first support part). The first link connecting part 215c may connect the first link part 215 and the second link part 223. The first link connecting part 215c may be formed of the same material as that of at least one of the first link part 215 and the second link part 223. One side of the first link cover 217 may be disposed on the first link connecting part 215c (e.g., on one surface in the z-axis direction). The first link cover 217 may be disposed to cover a portion of the first link connecting part 215c, a portion of the second rail structure 211_2 of the first rotation member 211, and a portion of the first arm member 221. In this process, the first link cover 217 may be disposed to press the first rotation member 211 and the first arm member 221 in the -z-axis direction, so that at least a portion of the first rotation member 211 and at least a portion of the first link part 215 act to have a more robust contact state, and at least a portion of the first arm member 221 and at least a portion of the second link part 223 may act to have a more robust contact state.

According to an embodiment, the second link member 250_2 may include a third link part 216, a fourth link part 224, a second link connecting part 216c, and a second link cover 218 (or a second cover or a second support part). The second link connecting part 216c may have a structure and a material which are the same as or similar to those of the first link connecting part 215c described above. One side of the second link cover 218 may be disposed on the second link connecting part 216c (e.g., on one surface in the z-axis direction). The second link cover 218 may be disposed to cover a portion of the second link connecting part 216c, a portion of the fourth rail structure 212_2 of the second rotation member 212, and a portion of the second arm member 222. Similarly to the first link cover 217, in the second link cover 218, at least a portion of the second rotation member 212 and at least a portion of the third link part 216 may act to have a more robust contact state, and at least a portion of the second arm member 222 and at least a portion of the fourth link part 224 may act to have a more robust contact state.

The first to fourth link parts 215, 223, 216, and 224 may be formed of the same or similar materials. Alternatively, the first to fourth link parts 215, 223, 216, and 224 may be formed of at least partially different structures or different materials (e.g., injection-molded products). Meanwhile, although the above description illustrates a form, in which the link parts 215, 223, 216, and 224 are connected, the disclosure is not limited thereto. For example, the first link part 215 and the second link part 223 may be separated from each other, and the third link part 216 and the fourth link part 224 may be separated from each other.

With respect to a folding axis (e.g., an imaginary axis which crosses a center between the first axis 11 and the second axis 12), a link rail protrusion and a link step (or a link wheel or a link support part) formed in the first link part 215 may be formed at positions which are symmetrical to a link rail protrusion and a link step formed in the third link part 216. For example, the link rail protrusions may be formed in the eleventh link sidewall 215_1 of the first link part 215 and the thirty-first link sidewall 216_1 of the third link part 216, and the link steps may be formed in the twelfth link sidewall 215_2 of the first link part 215 and the thirty-second link sidewall 216_2 of the third link part 216.

With respect to a folding axis (e.g., an imaginary axis which crosses a center between the first axis 11 and the second axis 12), a link rail protrusion and a link step formed in the second link part 223 may be formed at positions which are symmetrical to a link rail protrusion and a link step formed in the fourth link part 224. For example, link rail protrusions may be formed in the twenty-first link sidewall 223_1 of the second link part 223 and the forty-first link sidewall 224_1 of the fourth link part 224, and link steps may be formed in the twenty-second link sidewall 223_2 of the second link part 223 and the forty-second link sidewall 224_2 of the fourth link part 224.

According to an embodiment, a distance between the link steps in the first link part 215 and the second link part 223 (or the third link part 216 and the fourth link part 224) connected to the link connecting part may be formed to be smaller than a distance between the link rail protrusions. Meanwhile, an embodiment of the disclosure is not limited to the above-described example, and the positions of the link rail protrusions and the positions of the link steps may be formed on sidewalls of the same position or formed at positions of different sidewalls depending on the link parts.

According to an embodiment, positions of the rail protrusion and the rail groove of the first rotation member 211 may be disposed to be symmetrical to those of the rail protrusion and the rail groove of the second rotation member 212. Positions of the rail protrusion and the rail groove of the first arm member 221 may be disposed to be symmetrical to those of the rail protrusion and the rail groove of the second arm member 222. A distance between the rail protrusion of the first rotation member 211 and the rail protrusion of the first arm member 221 may be formed to be smaller (or greater) than a distance between the rail groove of the first rotation member 211 and the rail groove of the first arm member 221. Alternatively, in some embodiments, a distance between the rail protrusion of the first rotation member 211 and the rail groove of the first arm member 221 may be disposed to be the same as a distance between the rail groove of the first rotation member 211 and the rail protrusion of the first arm member 221.

As described above, the second rail structure 211_2 (or the second arm part 221_2) (a reverse rail structure), in which a rail protrusion and a rail groove are formed on opposite side surfaces of the first rotation member 211 (or the first arm member 221), may maintain a contact state with the link step and the link rail protrusion formed in the first link part 215 (or the second link part 223) more constantly during a hinge operation, so that gaps (or contact states) between the components included in the hinge structure may be maintained constantly. Accordingly, jointing of the hinge structure or movement thereof may be improved.

According to an embodiment, the first arm member 221 may be disposed to be symmetrical to the second arm member 222 with respect to the y-axis or the -y-axis. The first arm member 221 may be rotated from the z-axis in the -x-axis direction (counterclockwise with respect to a direction which faces the y-axis), or from the -x-axis direction toward the z-axis (clockwise with respect to a direction which faces the y-axis). A portion of the first arm member 221 may include a first through-hole such that the first shaft 231 may pass therethrough, and a first cam structure which contacts one side (e.g., a first fixed cam part 241a disposed in the -x-axis direction) of the cam member 241 to perform a cam operation may be provided in a peripheral structure which defines the first through-hole. At least a portion of the first through-hole may have a deformed shape or a portion of a z-axis cross-section thereof may have a D shape such that the first arm member 221 may be rotated in response to rotation of the first shaft 231. A portion of the first arm member 221 may include a hook or a step which is configured to be caught by one side (e.g., a stopper portion of an area which is disposed in the first main gear 233a) of the stopper 236 when the foldable electronic device 100 is to be rotated at a predetermined angle or more. A portion of the first arm member 221, into which a portion of the first shaft 231 is inserted, may be disposed between the stopper 236 and one side (e.g., the first fixed cam portion 241a) of the cam member 241. Another portion of the first arm member 221 may be fastened to the second link part 223 to be slid along the rail protrusion and the rail groove formed in the second link part 223 while the foldable electronic device 100 performs a hinge operation. In this regard, a rail groove corresponding to the rail protrusion of the second link part 223 and a rail protrusion corresponding to the rail groove of the second link part 223 may be disposed at another portion of the first arm member 221. According to an embodiment, the first arm member 221 may be separated from the second link part 223 not to be adhered thereto or fixed thereto to be slid (or rotated) in the second link part 223. In this process, a gap may be formed between the first arm member 221 and the second link part 223, and rotation of the first arm member 221 may become irregular due to the gap, or a specific portion during rotation may receive a higher pressure than other portions. In this regard, an embodiment of the disclosure may provide a structure, in which a protrusion of a rail and a groove are engaged with each other in a fastening structure of the first arm member 221 and the second link part 223. Additionally or alternatively, in an embodiment of the disclosure, by providing a link cover (or a link cover structure) which may press at least a portion of the first arm member 221 fastened to the second link part 223, a gap between the first arm member 221 and the second link part 223 (or a gap between a rail protrusion of the first arm member 221 and a rail groove of the second link part 223) may be reduced, or a gap between the first arm member 221 and the second link part 223 may be helped to be maintained constantly.

According to an embodiment, the second arm member 222 may be disposed to be symmetrical to the first arm member 221 with respect to the y-axis or the -y-axis. The second arm member 222 may be rotated from the z-axis in the x-axis direction (e.g., clockwise with respect to a direction which faces the -y-axis from the y axis), or from the x-axis direction toward the z-axis (e.g., counterclockwise with respect to a direction which faces the -y-axis from the y axis). The second arm member 222 may be rotated in a direction which is opposite to a motion direction of the first arm member 221. A portion of the second arm member 222 may include a second through-hole such that the second shaft 232 may pass therethrough, and a second cam structure which contacts another side (e.g., a second fixed cam part 241b disposed in the x-axis direction) of the cam member 241 to perform a cam operation may be provided in a peripheral structure which defines the second through-hole. The second through-hole, similar or identical to the structure of the first through-hole, may have a partially crushed shape or a D-shape at a portion of a z-axis cross-section so that the second arm member 222 may be rotated in response to rotation of the second shaft 232. A portion of the second arm member 222 may include a hook or a step which protrudes to be caught by an opposite side (e.g., a stopper portion of an area which is disposed in the second main gear 233b) of the stopper 236. When an external force is applied and the foldable electronic device 100 is to be at an unfolding angle or more (e.g., an angle of about 180 degrees or more), a step of a portion of the second arm member 222 may be supported by the stopper 236 such that the foldable electronic device 100 is not folded by a specific angle or more. A portion of the second arm member 222, into which a portion of the second shaft 232 is inserted, may be disposed between the stopper 236 and an opposite side (e.g., the second fixed cam portion 241b) of the cam member 241. Another portion of the second arm member 222 may be fastened to the fourth link part 224 to be slid along the rail protrusion and the rail groove formed in the fourth link part 224 while the foldable electronic device 100 performs a hinge operation. In this regard, another portion of the second arm member 222 may include a rail groove which is fastened to the rail protrusion of the fourth link part 224, and a rail protrusion (or a rail wing) which is fastened to the rail groove of the fourth link part 224.

According to an embodiment, the first shaft 231 may have a rod shape, in which a length thereof in the y-axis or -y-axis direction is larger than a length thereof in the x-axis or z-axis direction. The first shaft 231 may be formed of a metallic material to support inserted components. The first main gear 233a may be coupled to or formed in a one-side end of the first shaft 231 (e.g., integrated with the first shaft 231). A z-axis cross-section of one point of the first shaft 231 may include a flat area and a curved surface. As an example, an upper surface and a lower surface of a z-axis cross-section of at least one point of the first shaft 231 may be formed flat, respectively, and opposite side surfaces thereof may include a curved surface. Alternatively, a z-axis cross-section of the first shaft 231 may have a polygonal shape (e.g., a triangle, a quadrangle, a pentagon, or a hexagon). Accordingly, a structure in which a through-hole has a cylindrical shape may be maintained in a current state while not being rotated when the first shaft 231 is rotated, and in the case of a structure in which the through-hole includes an angled shape similar to the first shaft 231, it may be rotated together while the first shaft 231 is rotated. For example, a portion of the first arm member 221, a first fixed cam part 241a of the cam member 241, at least one washer ring (e.g., a first washer ring 249a), a first elastic member 242a, a portion of the shaft fixing part 243, and a first coupling means 249e1 (e.g., a first E-ring) (or a first fastening member or a first fastening means) may be inserted into (or coupled to) the first shaft 231.

According to an embodiment, the second shaft 232 may have a shape which is the same as or similar to that of the first shaft 231. For example, the second shaft 232 may have a rod shape, in which a length thereof in the y-axis or -y-axis direction is larger than a length thereof in the x-axis or z-axis direction. The second shaft 232 may be formed of a metallic material having a strength which is greater than or equal to a specified magnitude to support the inserted components. The second main gear 233b may be coupled to or formed in a one-side end of the second shaft 232 (e.g., integrated with the second shaft 232). As an example, an upper surface and a lower surface of a z-axis cross-section of the second shaft 232 may be formed flat, respectively, and opposite side surfaces thereof may include a curved surface. Alternatively, a z-axis cross-section of the second shaft 232 may have a polygonal shape. Accordingly, a structure in which a through-hole has a cylindrical shape may be maintained in a current state while not being rotated when the second shaft 232 is rotated, and in the case of a structure in which the through-hole includes an angled shape similar to the second shaft 232, it may be rotated together while the second shaft 232 is rotated. For example, a portion of the second arm member 222, a second fixed cam part 241b of the cam member 241, at least one washer ring (e.g., a second washer ring 249b), a second elastic member 242b, another portion of the shaft fixing part 243, and a second coupling means 249e2 (e.g., a second E-ring) (or a second fastening member or a second fastening means) may be inserted into (or coupled to) the second shaft 232.

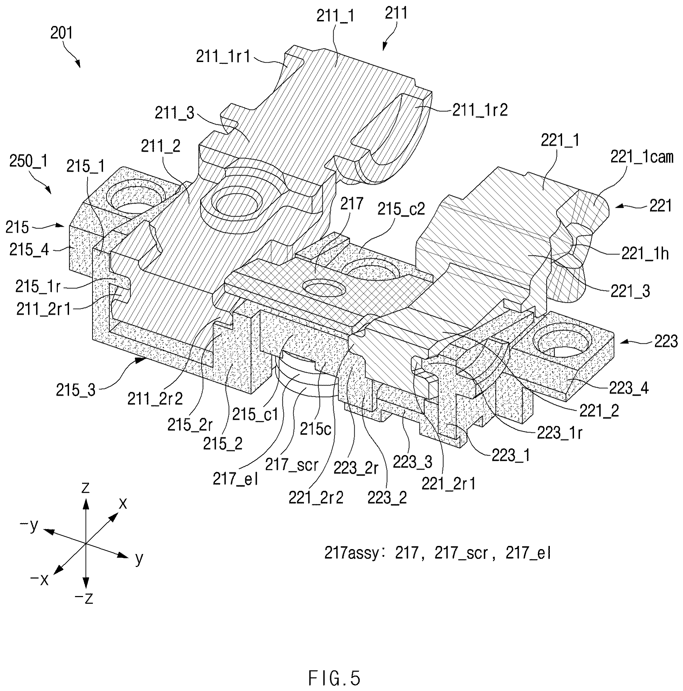

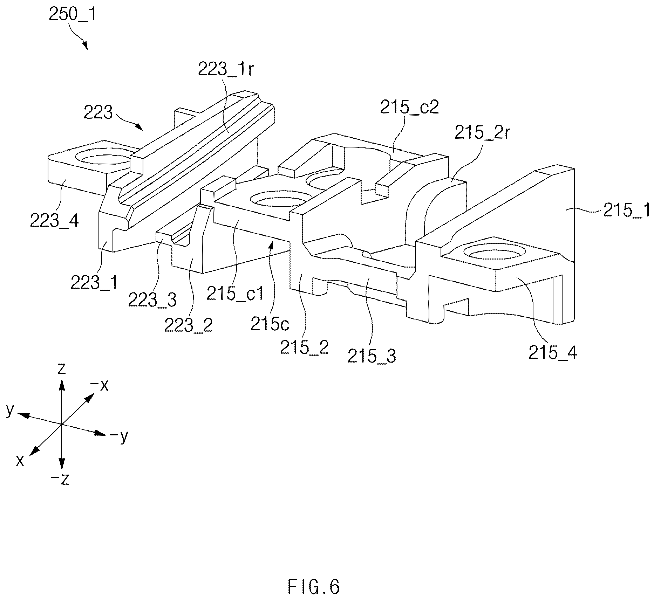

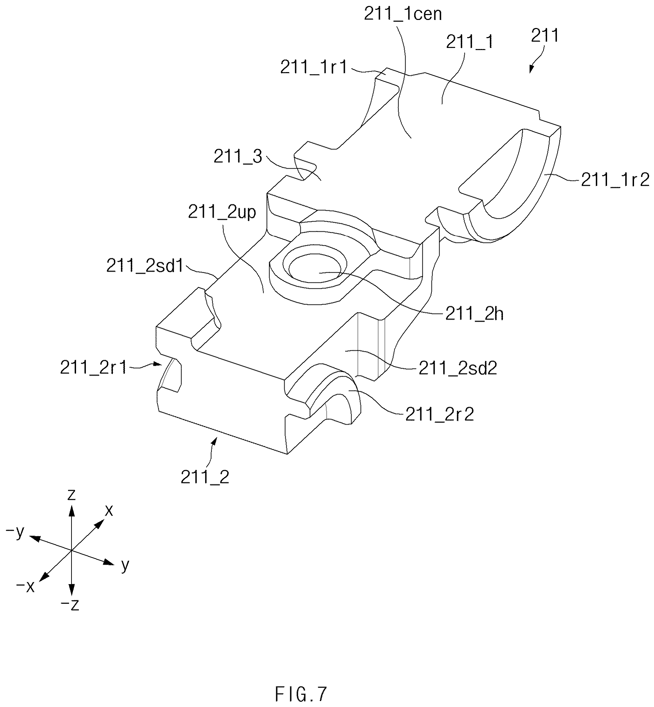

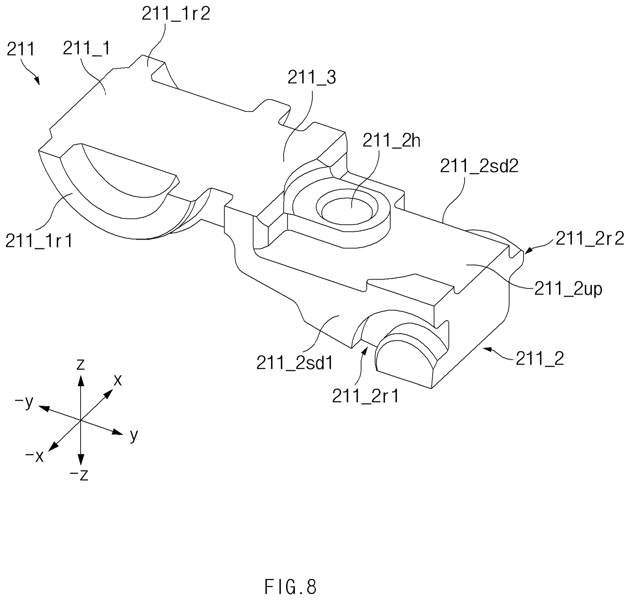

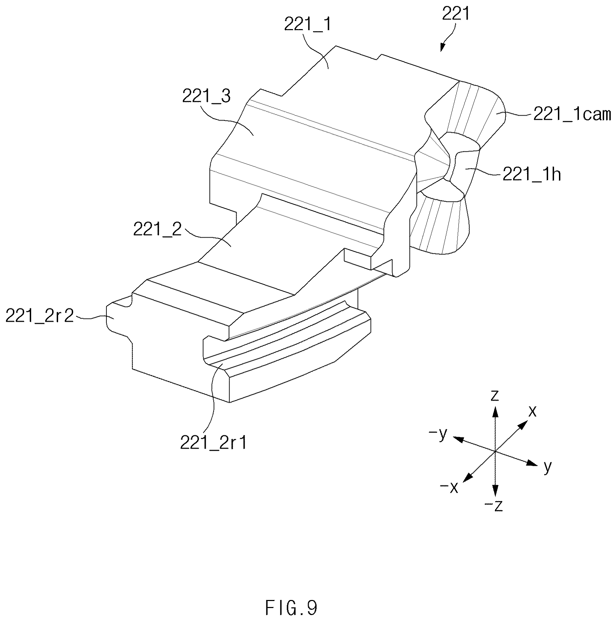

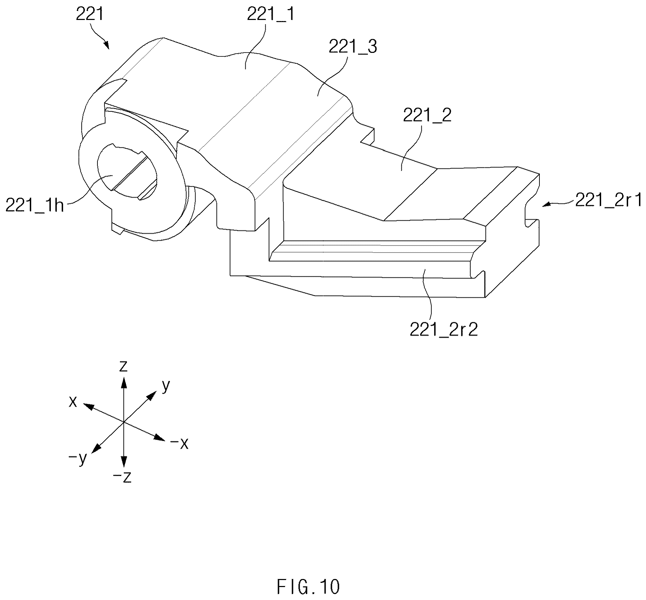

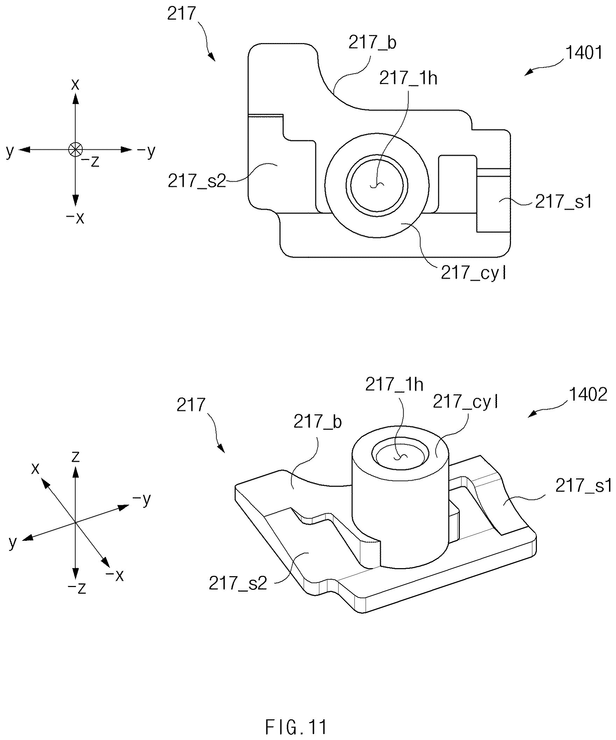

FIG. 5 is a view illustrating an example of configurations of a first link member, a first arm member, and a first rotation member according to an embodiment. FIG. 6 is a view illustrating an example of a first link member according to an embodiment. FIG. 7 is a view illustrating an example of a first disposition state of a first rotation member according to an embodiment. FIG. 8 is a view illustrating an example of a second disposition state of a first rotation member according to an embodiment. FIG. 9 is a view illustrating an example of a first disposition state of a first arm member according to an embodiment. FIG. 10 is a view illustrating an example of a second disposition state of a first arm member according to an embodiment. FIGS. 11A and 11B are a top plan view and a perspective view of a first link cover according to an embodiment. As used hereafter, "FIG. 11" may refer to one or more among FIGS. 11A and 11B.

At least some of the structures illustrated in FIGS. 5 to 11 correspond to an example of some components of the first-type hinge structure (e.g., the first-type hinge structure 201 described in FIG. 3) described above. As an example, the first link member illustrated in FIG. 5 may be the first link member 250_1 described above, and the first arm member and the first rotation member illustrated in FIG. 5 may be the first arm member 221 and the first rotation member 211 described above. In the following description, contents of improving jointing or inconvenience by improving changes in gaps of structures, such as the first link member 250_1, the first arm member 221, and the first rotation member 211, when the first-type hinge structure 201 is rotated will be described. However, the disclosure is not limited thereto, and the description of the first link member 250_1, the first arm member 221, and the first rotation member 211 described above may be applied to the second link member 250_2, the second arm member 222, and the second rotation member 212 in the same way, and may also be applied to another hinge structure (e.g., the second hinge structure 200b of FIG. 2) in the same way. Alternatively, the structure for improving the changes in the gaps of the disclosure may also be applied only to any one of the hinge structures included in the foldable electronic device 100.

Referring to FIGS. 1 to 5 and 6, a portion of the first-type hinge structure 201 according to an embodiment may include a first link member 250_1, to which portions of the first rotation member 211 and the first arm member 221 are fastened.

The first link member 250_1 may include a first link part 215 (or a first link part), a second link part 223 (or a second link part), a first link connecting part 215c (or a first connection part), and a first link cover structure 217assy (or a first link cover assembly) (e.g., a first link cover 217, a first coupling member 217_scr, or a first link elastic member 217_el). Here, the expressions "first" or "second" given to the components of the first link member 250_1 are assigned for linkage with the first link part 215 and the second link part 223 described in FIGS. 3 and 4 above, and such numbering may be changed.

The first link part 215 may include a first link body 215_3 (or a first body), an eleventh link sidewall 215_1 (or a first link sidewall of the first link part 215, a first sidewall of the first link part 215, or a first sidewall), a twelfth link sidewall 215_2 (or a second link sidewall of the first link part 215, a second sidewall of the first link part 215, or a second sidewall), a first link fixing part 215_4 (or a first fixing part), a first link rail protrusion 215_1r (or a first link rail, a first link rail structure, a link rail protrusion of the first link part 215, or a first protrusion), and a first link step 215_2r (or a first link support part or a first link protrusion part, a link step of the first link part 215, or a first step).

The first link body 215_3 may include a structure, of which a z-axis thickness is formed to be smaller than a y-axis or x-axis thickness thereof. The first link body 215_3 may be disposed between the eleventh link sidewall 215_1 and the twelfth link sidewall 215_2. The first link body 215_3 may be disposed to connect one side (e.g., a -z-axis periphery of the eleventh link sidewall 215_1) of the eleventh link sidewall 215_1 and one side (e.g., a -z-axis periphery of the twelfth link sidewall 215_2) of the twelfth link sidewall 215_2. When the first rotation member 211 is fastened (or coupled) to the first link part 215, an upper surface of the first link body 215_3 may be disposed to face a rear surface (e.g., a surface which faces the -z axis) of the second rail structure 211_2 of the first rotation member 211. As an example, a gap of a specific size may be formed between an upper surface of the first link body 215_3 and a rear surface of the second rail structure 211_2. At least a portion of an upper surface (e.g., a surface which faces the z-axis) of the first link body 215_3 may include a curved surface.

The eleventh link sidewall 215_1 may include a structure which is connected to a one-side periphery (e.g., a -y-axis periphery of the first link body 215_3) of the first link body 215_3, and extends in a direction (e.g., the z-axis direction) of an upper surface of the first link body 215_3. The eleventh link sidewall 215_1 may be disposed to face the twelfth link sidewall 215_2 with the first link body 215_3 therebetween. The eleventh link sidewall 215_1, for example, may be disposed to face a portion (e.g., one side surface of the second rail structure 211_2 or a side surface of the second rail structure 211_2 which faces the y-axis) of the first rotation member 211. A first link rail protrusion 215_1r which protrudes in a direction which faces the twelfth link sidewall 215_2 may be formed on a side surface (e.g., a surface which faces the y-axis) of the eleventh link sidewall 215_1. The first link rail protrusion 215_1r may include a band-shaped structure which protrudes while having a specific curvature (or an inclination) on a side surface of the eleventh link sidewall 215_1. A protrusion shape and a length of the first link rail protrusion 215_1r may have a shape (e.g., a shape, at least a portion of which is engaged with the first rail groove 211_2r1) corresponding to a shape of the first rail groove 211_2r1 formed in the second rail structure 211_2 of the first rotation member 211. According to an embodiment, at least at one point, at which the foldable electronic device 100 is changed from a folded state to an unfolded state, or from the unfolded state to the folded state, at least a portion of an upper surface (e.g., a surface which faces the z-axis) of the first link rail protrusion 215_1r may face or contact one surface (e.g., a surface which is disposed to face the -z-axis) of the first rail groove 211_2r1.

The twelfth link sidewall 215_2 may include a structure which is connected to an opposite-side periphery (e.g., a y-axis periphery of the first link body 215_3) of the first link body 215_3, and extends in a direction (e.g., the z-axis direction) of an upper surface of the first link body 215_3. The twelfth link sidewall 215_2 may be disposed to face the eleventh link sidewall 215_1 with the first link body 215_3 therebetween. The twelfth link sidewall 215_2, for example, may be disposed to face another portion (e.g., an opposite side surface of the second rail structure 211_2 or a side surface of the second rail structure 211_2 which faces the y-axis) of the first rotation member 211. A first link step 215_2r which is formed in a direction which faces the eleventh link sidewall 215_1 may be formed on a side surface (e.g., a surface which faces the -y-axis) of the twelfth link sidewall 215_2. An upper surface of the first link step 215_2r, which faces the z-axis, may be formed of a curved surface having a specific curvature. A width of the first link step 215_2r may be formed to be the same as or similar to (or, depending on a design scheme, smaller or greater than) a width of a protrusion of the first rail protrusion 211_2r2 (or the first rail) formed on an opposite side surface of the second rail structure 211_2 of the first rotation member 211. An upper surface (e.g., a surface which faces the z-axis) of the first link step 215_2r may be disposed to contact, or face, an inner surface (e.g., a surface which is observed when facing the z-axis direction from the -z axis) of the first rail protrusion 211_2r2.

The first link fixing part 215_4 may include a structure which extends in the - y-axis direction from one surface (e.g., a surface which faces the -y-axis) of the eleventh link sidewall 215_1. The first link fixing part 215_4 may include a structure which extends from an upper side (a z-axis periphery) of the eleventh link sidewall 215_1 in a direction which becomes more distant from the eleventh link sidewall 215_1. x-axis and y-axis lengths of at least a portion of the first link fixing part 215_4 may be formed to be greater than a thickness in the z-axis direction, and a center (or a portion) of an xy plane (a plane which faces the z axis) of the first link fixing part 215_4 may include a through-hole (e.g., a hole which passes in the -z-axis direction from the z axis) which is used to couple the first link member 250_1 to the housing (e.g., the first housing 110 of FIG. 2). Additionally, the first link fixing part 215_4 may include a sidewall which extends in the -z-axis direction and supports the first link fixing part 215_4.

The second link part 223 may include a second link body 223_3 (or a link body of the second link part 223, or a second body), a twenty-first link sidewall 223_1 (or a first sidewall of the second link part 223, or a third sidewall), a twenty-second link sidewall 223_2 (or a second sidewall of the second link part 223, or a fourth sidewall), a second link fixing part 223_4 (or a fixing part of the second link part 223, or a second fixing part), a second link rail protrusion 223_1r (or a second link rail, a second link rail structure, a link rail protrusion of the second link part 223, or a second protrusion), and a second link step 223_2r (or a second link support part, a second link protrusion part, a link step of the second link part 223, or a second step). A link step 215_2r may be formed in the twelfth link sidewall 215_2 in the first link part 215, and a link step 215_2r may be formed in the twenty-second link sidewall 215_2 of the first link part 215, and a second link step 223_2r may be formed in the twenty-second link sidewall 223_2 (or a sidewall connected to the link connecting part 215c) of the second link part 223, such that the link cover 217 included in the link cover structure 217assy may be disposed in the link connecting part 215c to press the first rotation member 211 and the first arm member 221.

The second link body 223_3 may include a structure, of which a thickness in the z-axis direction is formed to be smaller than a thickness in the y-axis or x-axis direction. As an example, the second link body 223_3 may be formed to be parallel to the first link body 215_3. Alternatively, the second link body 223_3 may be disposed at a position, of which a z-axis height is different from that of the first link body 215_3. The second link body 223_3 may be disposed between the twenty-first link sidewall 223_1 and the twenty-second link sidewall 223_2. The second link body 223_3 may be disposed to connect one side (e.g., a -z-axis periphery of the twenty-first link sidewall 223_1) of the twenty-first link sidewall 223_1 and one side (e.g., a -z-axis periphery of the twenty-second link sidewall 223_2) of the twenty-second link sidewall 223_2. When the first arm member 221 is fastened (or coupled) to the first link member 250_1, an upper surface of the second link body 223_3 may be disposed to face a rear surface (e.g., a surface which faces the -z axis) of the second arm part 221_2 of the first arm member 221. As an example, a gap of a specific size may be formed between an upper surface of the second link body 223_3 and a rear surface of the second arm part 221_2. At least a portion of an upper surface of the second link body 223_3 may form a curved surface.

The twenty-first link sidewall 223_1 may include a structure which is connected to a one-side periphery (e.g., a y-axis periphery of the second link body 223_3) of the second link body 223_3, and extends in a direction (e.g., the z-axis direction) of an upper surface of the second link body 223_3. The twenty-first link sidewall 223_1 may be disposed to face the twenty-second link sidewall 223_2 with the second link body 223_3 therebetween. The twenty-first link sidewall 223_1, for example, may be disposed to face a portion (e.g., one side surface of the second arm member 221_2, or a side surface of the second arm part 221_2 which faces a y-axis) of the first arm member 221. A second link rail protrusion 223_1r which protrudes in a direction which faces the twenty-second link sidewall 223_2 may be formed on a side surface (e.g., a surface which faces a -y-axis) of the twenty-first link sidewall 223_1. The second link rail protrusion 223_1r may include a band-shaped structure which protrudes while having a specific length on a side surface of the twenty-first link sidewall 223_1. A protruding shape and a length of the second link rail protrusion 223_1r may have a shape (e.g., a shape, at least a portion of which is engaged with the second rail groove 221_2r1) corresponding to a shape of the second rail groove 221_2r1 formed in the second arm part 221_2 of the first arm member 221. According to an embodiment, at least at one point, at which the foldable electronic device 100 is changed from a folded state to an unfolded state, or from the unfolded state to the folded state, an upper surface (e.g., a surface which faces the z-axis) of the second link rail protrusion 223_1r may face or contact one surface (e.g., a surface which is disposed to face the -z-axis) of the second rail groove 221_2r1. The second link rail protrusion 223_1r may have a longer length than the first link rail protrusion 215_1r described above. Alternatively, a bending degree of the second link rail protrusion 223_1r may be formed to be smaller (gentler) than that of the first link rail protrusion 215_1r described above. A magnitude of a curvature of the first link rail protrusion 215_1r may be formed to be larger than a magnitude of a curvature of the second link rail protrusion 223_1r.

The twenty-second link sidewall 223_2 may include a structure which is connected to an opposite-side periphery (e.g., a -y-axis periphery of the second link body 223_3) of the second link body 223_3, and extends in a direction (e.g., the z-axis direction) of an upper surface of the second link body 223_3. The twenty-second link sidewall 223_2 may be disposed to face the twenty-first link sidewall 223_1 with the second link body 223_3 therebetween. The twenty-second link sidewall 223_2, for example, may be disposed to face another portion (e.g., an opposite side surface of the second arm member 221_2, or a side surface of the second arm part 221_2 which faces a -y-axis) of the first arm member 221. A second link step 223_2r which is formed in a direction which faces the twenty-first link sidewall 223_1 may be formed on a side surface (e.g., a surface which faces the y-axis) of the twenty-second link sidewall 223_2. A width (e.g., a y-axis thickness) of the second link step 223_2r, for example, may be formed to be the same as or similar to (or, depending on a design scheme, smaller than or greater than) a width of the second rail protrusion 221_2r2 formed on an opposite side surface of the second arm part 221_2 of the first arm member 221. An upper surface (e.g., a surface which faces the z-axis) of the second link step 223_2r may be disposed to contact, or face, an inner surface (e.g., a surface which is observed when facing the z-axis direction from the -z axis) of the second rail protrusion 221_2r2. A length (e.g., a length formed in a -x-axis direction from an x-axis) of the second link step 223_2r may be the same as or similar to a length of the second rail protrusion 221_2r2. A magnitude of a curvature of an upper surface (e.g., a surface which faces the z-axis) of the second link step 223_2r may be formed to be smaller (gentler) than a magnitude of a curvature of an upper surface (e.g., a surface which faces the z-axis) of the first link step 215_2r described above. Alternatively, a magnitude of a curvature of the second link step 223_2r may be formed to be larger than a magnitude of a curvature of the first link step 215_2r. According to an embodiment, a length of an upper surface of the second link step 223_2r may be formed to be greater than a length of an upper surface of the first link step 215_2r.

The second link fixing part 223_4 may include a structure which extends in a y-axis direction from one surface (e.g., a surface which faces the y-axis) of the twenty-first link sidewall 223_1. The second link fixing part 223_4 may include a structure which extends from an upper side (the z-axis periphery) of the twenty-first link sidewall 223_1 in a direction which becomes more distant from the twenty-first link sidewall 223_1. The second link fixing part 223_4 may include a structure which is the same as or similar to which of the first link fixing part 215_4 described above. As an example, x-axis and y-axis lengths of at least a portion of the second link fixing part 223_4 may be formed to be greater than a thickness in a z-axis direction, and a center (or a portion) of an xy plane (or a surface which faces the z-axis) of the second link fixing part 223_4 may include a through-hole (e.g., a hole which passes in the -z-axis direction from the z-axis) which is used to couple the first link member 250_1 to a housing (e.g., the first housing 110 of FIG. 2). Additionally, the second link fixing part 223_4 may include a sidewall which extends in a -z-axis direction and supports the second link fixing part 223_4. Link fixing parts formed on the third link part 216 and the fourth link part 224 may be used to fix (or couple) the second link member 250_2 to a housing (e.g., the second housing 120 of FIG. 2).

The first link connecting part 215c may be disposed between the first link part 215 (or the twelfth link sidewall 215_2 of the first link part 215) and the second link part 223 (or the twenty-second link sidewall 223_2 of the second link part 223). The first link connecting part 215c may include a first connecting portion 215_c1 (or a first connecting portion or a first portion of the first link connecting part 215c), in which the first link cover structure 217assy is disposed, and a second connecting portion 215_c2 (or a second connecting portion or a second portion of the first link connecting part 215c) which is connected to the first connecting portion 215_c1. The second connecting portion 215_c2 may be stepped from the first connecting portion 215_c1, or may be disposed on the same plane. The second connecting portion 215_c2 may include a through-hole which passes in a -z-axis direction from a z-axis and is used to fix the first link connecting part 215c to a housing (e.g., the first housing 110 of FIG. 2). The first connecting portion 215_c1 may include an upper surface (e.g., a surface in the z-axis direction), on which the first link cover 217 of the first link cover structure 217assy may be seated (or disposed). A peripheral portion of an upper surface of the first connecting portion 215_c1 may include an at least partially inclined portion, a central portion of the upper surface of the first connecting portion 215_c1 may include a recessed structure, and a cover coupling hole (or a fastening hole) which passes in the -z-axis direction from the z-axis may be disposed at a center of the recessed structure. At least a portion of the first link cover structure 217assy may be disposed in the cover coupling hole. The first coupling member 217_scr and the first link elastic member 217_el of the first link cover structure 217assy may be disposed on a lower surface (e.g., a surface which faces the -z-axis direction) of the first connecting portion 215_c1.

The first link cover structure 217assy may include the first link cover 217 which is disposed at an upper portion of the first link connecting part 215c (e.g., the first connecting portion 215_c1), and the first coupling member 217_scr and the first link elastic member 217_el which are disposed at lower portions of the first link connecting part 215c. A central portion of the first link cover 217 may be positioned on an upper portion of the first connecting portion 215_c1, a portion (e.g., a periphery in a -y-axis direction) of the first link cover 217 may be disposed to cover one side (e.g., an upper surface (e.g., a surface which faces the z-axis) of the first rail protrusion 211_2r2) of the first rotation member 211, and another portion (e.g., a periphery in a y-axis direction) of the first link cover 217 may be disposed to cover one side (e.g., an upper surface (e.g., a surface which faces the z-axis) of the second rail protrusion 221_2r2) of the first arm member 221. The first coupling member 217_scr may be coupled to the first link cover 217 such that the first link cover 217 may provide a specific pressure in the -z-axis direction. For example, when the first coupling member 217_scr is coupled to the first link cover 217 in a screw type (e.g., a type including a head and a protruding portion which protrudes from the head and in which a screw pattern is formed) (or a rivet type), the first link cover 217 may provide a pressure to press one side of the first rotation member 211 and one side of the first arm member 221. The first link elastic member 217_el may be disposed between the first coupling member 217_scr and a lower surface of the first link connecting part 215c, and may provide elasticity to the first link cover 217. The first link cover 217 coupled to the first coupling member 217_scr may be disposed in a contact state, in which it is elastically pressed against a one-side structure (at least a portion of an upper surface of the first connecting portion 215_c1, one side (e.g., an upper surface of the first rail protrusion 211_2r2) of the first rotation member 211, and one side (e.g., an upper surface of the second rail protrusion 221_2r2) of the first arm member 221), based on elasticity of the first link elastic member 217_el. As the first link cover 217 presses some structures (e.g., one side (e.g., an upper surface of the first rail protrusion 211_2r2) of the first rotation member 211, and one side (e.g., an upper surface of the second rail protrusion 221_2r2) of the first arm member 221) of the first-type hinge structure 201 based on elasticity of the first link elastic member 217_el, a portion of a link rail protrusion or a link step formed in the first link member 250_1 (or the first link part 215 and the second link part 223) and a portion of a rail protrusion or a rail groove formed in the first rotation member 211 or the first arm member 221 may be maintained in a contact state, so that a change in a gap between the first rotation member 211 and the first link part 215 or a gap between the first arm member 221 and the second link part 223 may be reduced or improved, thereby improving movement during hinge operation of the foldable electronic device 100.

According to an embodiment, in the same or similar way as the structure of the first link member 250_1 described above, the second link member 250_2 may include a second link connecting part 216c, and the second link connecting part 216c may include a third connecting portion and a fourth connecting portion. The third connecting portion and the fourth connecting portion may have structures which are the same as or similar to those of the first connecting portion 215_c1 and the second connecting portion 215_c2 described above. A second link cover structure which is the same as or similar to the first link cover structure 217assy may be disposed in the second link connecting part 216c of the second link member 250_2. The second link cover structure may include a second link cover 218 corresponding to the first link cover 217 of the first link cover structure 217assy, a second coupling member corresponding to the first coupling member 217_scr, and a second link elastic member corresponding to the first link elastic member 217_el. As an example, a portion (e.g., a one-side periphery) of the second link cover 218 included in the second link cover structure may be disposed to cover at least a portion of a third rail protrusion (e.g., a configuration corresponding to the first rail protrusion 211_2r2 of the first rotation member 211) of the second rotation member 212, and another portion (e.g., an opposite-side periphery) of the second link cover 218 may be disposed to cover at least a portion of a fourth rail protrusion (e.g., a configuration corresponding to the second rail protrusion 221_2r2 of the first arm member 221) of the second arm member 222.

According to an embodiment, the third link part 216 which is disposed at a position which is symmetrical with respect to a folding axis (or the first axis 11 or the second axis 12), around which the foldable electronic device 100 is folded, may include a structure which is the same as or similar to that of the first link part 215. For example, the third link part 216 may include a third link body corresponding to the first link body 215_3, a thirty-first link sidewall 216_1 (or a first sidewall of the third link part 216), a thirty-second link sidewall 216_2 (or a second sidewall of the third link part 216), a third link fixing part (or a third fixing part), a third link rail protrusion (or a third link rail, a third link rail structure, or a link rail protrusion of the third link part 216), and a third link step (or a third link support part or a third link protrusion part, or a link step of the third link part 216), and the above-described structures may be formed to be the same as or similar to those of the respective components of the first link part 215.

According to an embodiment, the fourth link part 224 which is disposed at a position which is symmetrical with respect to a folding axis (or the first axis 11 or the second axis 12), around which the foldable electronic device 100 is folded, may include a structure which is the same as or similar to that of the second link part 223. For example, the fourth link part 224 may include a fourth link body, a forty-first link sidewall 224_1 (or a first sidewall of the fourth link part 224), a forty-second link sidewall 224_2 (or a second sidewall of the fourth link part 224), a fourth link fixing part (or a fourth fixing part), a fourth link rail protrusion (or a fourth link rail, a fourth link rail structure, or a link rail protrusion of the fourth link part 224), and a fourth link step (or a fourth link support part or a fourth link protrusion part, or a link step of the fourth link part 224), and the above-described structures may be formed to be the same as or similar to those of the respective components of the second link part 223.

Referring to FIGS. 5 to 8, the first rotation member 211 may include a first rotation body 211_3, a first rail structure 211_1 which extends to a one-side end (e.g., an end in the x-axis direction) of the first rotation body 211_3, and a second rail structure 211_2 which extends to an opposite-side end (e.g., an end in the -x-axis direction) of the first rotation body 211_3. At least a portion of the first rail structure 211_1 may be inserted into or coupled to a first fixing rail groove of the fixing bracket 213. The second rail structure 211_2 may be coupled to the first link part 215. The first rotation member 211 may be rotated around the first axis 11.

The first rail structure 211_1 may include a first central portion 211_1cen (or a first central portion of the first rail structure 211_1), of which at least a portion of an upper surface (e.g., a surface which faces the z-axis) is formed flat. A first rotation rail 211_1r1 (or a first rail) may be disposed on a first side surface (e.g., a side surface which faces the -y-axis) of the first central portion 211_1cen, and a second rotation rail 211_1r2 (or a second rail) may be disposed on a second side surface (e.g., a side surface which faces the y-axis) of the first central portion 211_1cen. The first rotation rail 211_1r1 may include a halfmoon structure (or an arc structure) which has a shape which is convex from the z-axis direction toward the -z-axis direction, and protrudes from the first side surface in the -y-axis direction. The second rotation rail 211_1r2 may include a semicircular structure (or an arc structure) which has a shape which is convex in the same direction (e.g., from the z-axis direction toward the -z-axis direction, or from a front surface toward a rear surface of the display 160) as which of the first rotation rail 211_1r1, and protrudes from the second side surface in the y-axis direction. The first rotation rail 211_1 r1 and the second rotation rail 211_1r2 may be disposed to be symmetrical to each other with respect to an imaginary line in the x-axis direction, which crosses the central portion. The first rotation rail 211_1r1 and the second rotation rail 211_1r2 may be coupled to a first fixing rail groove of the fixing bracket 213. In this regard, the first fixing rail groove of the fixing bracket 213 may include rail grooves which are formed to face the first side surface and the second side surface of the first rotation member 211, in sidewalls which define a groove formed at a central portion of the fixing bracket body 213a3 (or a groove).

The second rail structure 211_2 may include a second central portion 211_2up (or a second central portion of the second rail structure 211_2), of which at least a portion of an upper surface (e.g., a surface which faces the z-axis) is formed flat. A coupling hole 211_2h which is formed from the z-axis in the -z-axis direction may be formed in the second central portion 211_2up. A protrusion (or a boss) formed in the first link member 250_1 may be inserted into the coupling hole 211_2h, so that the second rail structure 211_2 and the first link member 250_1 may be coupled to each other more firmly, and after coupling, movement between structures (e.g., between the second rail structure 211_2 and the first link part 215) may be prevented. The protrusion (or a boss) of the first link member 250_1 may be omitted. For example, the coupling hole 211_2h may be removed from the second rail structure 211_2. A first rail groove 211_2r1 may be disposed on a first side surface 211_2sd1 (e.g., a side surface that faces the -y-axis) of the second central portion 211_2up, and a first rail protrusion 211_2r2 (or a first rail) may be disposed on a second side surface 211_2sd2 (e.g., a side surface which faces the y-axis) of the second central portion 211_2up.

The first rail groove 211_2r1 may be formed on the first side surface 211_2sd1 of the second rail structure 211_2. The first rail groove 211_2r1 may include a groove which is recessed from a surface (or the -y-axis) of the first side surface 211_2sd1 of the second rail structure 211_2, in the y-axis direction. The first rail groove 211_2r1 may be fastened to the first link rail protrusion 215_1r formed on the eleventh link sidewall 215_1 of the first link part 215. In this regard, a shape of the first rail groove 211_2r1 may be formed to be the same as or similar to a shape of the first link rail protrusion 215_1r. According to one embodiment, the first rail groove 211_2r1 may have a shape which is opposite to that of the first rail protrusion 211_2r2. For example, the first rail groove 211_2r1 may have a shape which is recessed in correspondence to a protruding shape of the first rail protrusion 211_2r2. As an example, the first rail groove 211_2r1 may be formed to be convex from the -z-axis direction in the z-axis direction. Alternatively, at least a portion of the first rail groove 211_2r1 may include an arc shape.

The first rail protrusion 211_2r2 may be formed on the second side surface 211_2sd2 of the second rail structure 211_2. The first rail protrusion 211_2r2 may be formed to protrude from a surface of the second side surface 211_2sd2 in the y-axis direction. At least a portion of the first rail protrusion 21 1_2r2 may be fastened to the first link step 215_2r formed on the twelfth link sidewall 215_2 of the first link part 215. As an example, a convex surface (or an inner surface of the first rail protrusion 211_2r2) observed in the -z-axis direction of the first rail protrusion 211_2r2 and a convex surface of the first link step 215_2r may be disposed to face (or contact) each other. A convex surface (or an outer surface of the first rail protrusion 211_2r2) observed in the z-axis direction of the first rail protrusion 21 1_2r2 and one side (e.g., a portion of the first link cover 217 observed from the -z-axis direction) of the first link cover 217 may be disposed to face (or contact) each other. In this regard, the first rail protrusion 211_2r2 may have a specific thickness, and may have a shape which is convex from the -z-axis direction toward the z-axis direction, and at least a portion of the first rail protrusion 211_2r2 may include an arc structure which protrudes from the second side surface 211_2sd2 in the y-axis direction. The first rail groove 211_2r1 and the first rail protrusion 211_2r2 may be disposed on the y-axis and the -y-axis, respectively, to be symmetrical to each other with respect to an imaginary line in the x-axis direction, which crosses the second central portion 211_2up. A protruding shape of the first rail protrusion 211_2r2 may correspond to a recessed shape of the first rail groove 211_2r1. As an example, a curvature of the first rail protrusion 211_2r2 may have a magnitude which is the same as or similar to (similar within a specific error range) a curvature of the first rail groove 211_2r1.

The above-described first rotation member 211 may have a structure which is the same as or similar to that of the second rotation member 212. According to one embodiment, the second rotation member 212 may include a third rail structure 212_1, a fourth rail structure 212_2, and a second rotation body 212_3, and the third rail structure 212_1 of the second rotation member 212, similarly to the first rail structure 211_1 of the first rotation member 211, may include a third central portion, and a third rotation rail corresponding to the first rotation rail 211_1r1 and a fourth rotation rail corresponding to the second rotation rail 211_1r2, which are disposed on opposite side surfaces of the third central portion. The fourth rail structure 212_2 of the second rotation member 212, similarly to the second rail structure 211_2 of the first rotation member 211, may include a fourth central portion, and a second rail groove corresponding to the first rail groove 211_2r1 and a second rail protrusion corresponding to the first rail protrusion 211_2r2, which are disposed on opposite side surfaces of the fourth central portion. The first rotation member 211 and the second rotation member 212 may be formed as one body, but the disclosure is not limited thereto. Meanwhile, the positions of the first rail groove 211_2r1 and the first rail protrusion 211_2r2 (or the second rail groove and the second rail protrusion) may be opposite depending on a change in the structure formed in the first link part 215 (or the third link part 216).

As described above, as at least a portion of one surface (e.g., an outer surface of the first rail protrusion 211_2r2 or a surface observed in a direction facing the z-axis) of the first rail protrusion 211_2r2 is maintained in a contact state with the first link cover 217, in the disclosure, the first-type hinge structure 201 and the foldable electronic device 100 including the same may maintain gaps with a periphery of the first rail protrusion 21 1_2r2 to be constant during a rotation process of the first rotation member 211, so that movement of the first rotation member 211 may be improved.

Referring to FIGS. 5 to 10, the first arm member 221 may include a first arm body 221_3, a first arm part 221_1, and a second arm part 221_2. The first arm body 221_3 may be disposed between the first arm member 221 and the second arm part 221_2. The first arm body 221_3 may connect the first arm member 221 and the second arm part 221_2, and while the foldable electronic device 100 is folded or unfolded, a force, by which the second arm part 221_2 is slid (or moved in an arc motion) from the second link part 223, may be transmitted to the first arm part 221_1. Alternatively, the first arm body 221_3 may transmit a rotational force of the first arm part 221_1 to the second arm part 221_2, while the first arm part 221_1 is rotated according to rotation of the first shaft 231. A form of transmission of force may be interpreted differently depending on an observed time point or position.

The first arm part 221_1 may include a first arm hole 221_1h into which the first shaft 231 may be inserted, and a first cam structure 221_1cam (or a first cam structure formed in the first arm member 221, or a first rotation cam structure) which is formed at a peripheral portion defining the first arm hole 221_1h and faces a first fixed cam portion 241a of the cam member 241. The first arm hole 221_1h may have a diameter which is similar to that of the first shaft 231 so that the first shaft 231 may be inserted thereinto. An inner side of the first arm hole 221_1h may be formed such that at least a portion of a cross section in the z-axis direction is angular, so that the inner side may be rotated in response to rotation of the first shaft 231. Alternatively, at least a portion of a z-axis cross-sectional shape of the first arm hole 221_1h may have a D-cut shape or a polygonal shape. A z-axis cross-sectional shape of the first arm hole 221_1h may correspond to a shape of a z-axis cross section of the first shaft 231.

The first cam structure 221_1cam may be disposed to face (or contact) the first fixed cam portion 241a of the cam member 241, and may perform a cam operation in response to rotation of the first arm member 221 while being pressed by the first elastic member 242a. For example, while the foldable electronic device 100 is held at a specific angle (e.g., a specific angle which is greater than 0 degrees and smaller than 180 degrees), a ridge or protrusion of a cam profile of the first cam structure 221_1cam may be engaged with a ridge or protrusion of the first fixed cam portion 241a, so that the first elastic member 242a may be compressed to a specific reference or more. While an upper end of the first cam structure 221_1cam and an upper end of the first fixed cam portion 241a are maintained in a contact state, a compression amount of the first elastic member 242a of a specific magnitude or more may be maintained, and a frictional force of a corresponding peripheral structure (e.g., friction plates) may contribute to maintaining the foldable electronic device 100 at the specific angle.

The second arm part 221_2 may include a fifth central portion (or a central portion of the second arm part 221_2) which is connected to the first arm body 221_3, a second rail groove 221_2r1 which is recessed in the -y-axis direction on one side surface (e.g., a side surface which faces the y-axis direction) of the fifth central portion, and a second rail protrusion 221_2r2 which protrudes in the -y-axis direction on an opposite side surface (e.g., a side surface which faces the -y-axis direction) of the fifth central portion. The second rail groove 221_2r1 may be fastened to the second link rail protrusion 223_1r formed on the twenty-first link sidewall 223_1 of the second link part 223.

The second rail protrusion 221_2r2 may be fastened to (or face or contact) the second link step 223_2r formed on the twenty-second link sidewall 223_2 of the second link part 223. As an example, a surface (e.g., a lower surface) of the second rail protrusion 221_2r2, which faces the -z-axis direction, may face (or contact) a surface of the second link step 223_2r, which faces the z-axis direction. A surface (e.g., a lower surface) of the second rail protrusion 221_2r2, which faces the z-axis direction, may face (or contact) a portion of the first link cover 217, which faces the -z-axis direction. As the first link cover 217 contacts the second rail protrusion 221_2r2 while pressing at least a portion of the second rail protrusion 221_2r2 in the z-axis direction toward the -z-axis direction, a spacing between the first link cover 217 and the second rail protrusion 221_2r2 may be constantly maintained (e.g., maintained in a contact state). Accordingly, while the foldable electronic device 100 is folded or unfolded, movement of the first arm member 221 may be improved, so that the foldable electronic device 100 may be folded or unfolded more stably.

According to an embodiment, the second arm member 222 may include a second arm body, a third arm part, and a fourth arm part, and the second arm body may correspond to the first arm body 221_3 of the first arm member 221, the third arm part may correspond to the first arm part 221_1 of the first arm member 221, and the fourth arm part may correspond to the second arm part 221_2 of the first arm member 221. Accordingly, a description of the detailed structure of the second arm member 222 will be replaced with a description of the structure of the first arm member 221.

Meanwhile, in the description of the first-type hinge structure 201 described above, a rail protrusion (or a rail or a rail structure) which protrudes from one surface, and a rail groove which is engraved (or recessed) from one surface may be formed opposite to each other. As an example, a protruding rail structure (or a rail protrusion) formed in the first rotation member 211 may be changed to an engraved rail groove, and correspondingly, the first fixing rail groove 213a1 (or a first rail groove or a first groove) of the fixing bracket 213 coupled to the first rotation member 211 may be changed to a rail protrusion of a protrusion structure. Such a structural change may be applied not only to the first rotation member 211, but also to the second rotation member 212, the first arm member 221, the second arm member 222, and the first link member 250_1 and the second link member 250_2, to which each of them is coupled, in the same way or similarly.

Referring to FIGS. 5 to 11, the first link cover 217 may include a first cover body 217_b and a first coupling part 217_cyl.

Referring to one surface of the first link cover 217 in state 1401 and one surface of the first link cover 217 in state 1402, the first cover body 217_b may include a portion, in which at least a portion of an upper surface (or one surface) (e.g., a surface which faces the z-axis direction) is flatly formed, and another portion thereof may be inclined. For example, a - x-axis periphery of the first cover body 217_b may be flatly formed. An inclination may be formed in the x-axis direction from a -x-axis periphery of the first cover body 217_b. The inclination of the first cover body 217_b may include an inclination corresponding to an upper surface of the first link connecting part 215c (or the second connecting portion 215_c2) in the z-axis direction. Although a form, in which an inclination is formed on an upper surface (or one surface) of the first cover body 217_b, has been exemplified, the disclosure is not limited thereto, and the entire upper surface of the first cover body 217_b may be flatly formed when viewed in the z-axis direction. At least a portion of a lower surface (e.g., a surface which faces the -z-axis direction) of the first cover body 217_b may include an inclined portion. For example, the lower surface of the first cover body 217_b may include a first inclined part 217_s1 which faces the first rail protrusion 211_2r2, and a second inclined part 217_s2 which faces the second rail protrusion 221_2r2. At least a portion of each of the first inclined part 217_s1 and the second inclined part 217_s2 may include a curve. For example, a curvature of the first inclined part 217_s1 may be formed to be similar to or the same as a curvature of the first rail protrusion 211_2r2 which faces it, and a curvature of the second inclined part 217_s2 may be formed to be similar to or the same as a curvature of the second rail protrusion 221_2r2 which faces it. A curvature of the first rail protrusion 211_2r2 may be formed to be greater than a curvature of the second rail protrusion 221_2r2. Correspondingly, a curvature of the first inclined part 217_s1 may be formed to be greater than a curvature of the second inclined part 217_s2.

A length of a portion which extends in the x-axis direction from a -x-axis periphery and a -y-axis periphery of the first cover body 217_b, and a length of a portion which extends in the x-axis direction from a -x-axis periphery and a y-axis periphery of the first cover body 217_b, may be formed differently. Furthermore, a length of a -y-axis periphery and a length of a y-axis periphery of the first cover body 217_b may be formed differently. As an example, a length of a -y-axis periphery of the first cover body 217_b, which is disposed to cover at least a portion of the first rail protrusion 211_2r2 formed in the first rotation member 211, may be formed to be shorter than a length of a y-axis periphery of the first cover body 217_b, which is disposed to cover at least a portion of the second rail protrusion 221_2r2 formed in the first arm member 221. Here, a length of the first rail protrusion 211_2r2 (or the second rail protrusion 221_2r2) in the -x-axis direction or the x-axis direction may be formed to be shorter (or longer) than a length of the second rail protrusion 221_2r2 (or the first rail protrusion 211_2r2). According to an embodiment, a length of the first inclined part 217_s1 may be formed to be shorter than a length of the second inclined part 217_s2. Alternatively, an extent of the first inclined part 217_s1 (or the second inclined part 217_s2) may be formed to be smaller (or larger) than an extent of the second inclined part 217_s2 (or the first inclined part 217_s1).

The first coupling part 217_cyl may protrude from a portion (e.g., a central portion) of the first cover body 217_b in the -z-axis direction, and may have a cylindrical shape having an empty central portion, as a first coupling hole 217_1h is formed in the -z-axis direction. According to an embodiment, a protruding length of the first coupling part 217_cyl in the -z-axis direction may be formed to be greater than a z-axis thickness of the first cover body 217_b. A pattern (e.g., a female screw thread) which may be coupled to a coupling member (e.g., a bolt) may be formed on an inner side of the first coupling part 217_cyl. Here, the first coupling part 217_cyl is used for coupling to a separate coupling member, and a shape thereof may be changed to a different shape (e.g., a hook). The first coupling part 217_cyl may be inserted into or fastened to the first connecting portion 215_c1 formed in the first link member 250_1 (or the first connecting portion 215_c1 of the first link connecting part 215c). For example, a through-hole which passes from the z axis in the -z-axis direction may be formed in the first connecting portion 215_c1, and at least a portion of the first coupling part 217_cyl may be inserted into the through-hole formed in the first connecting portion 215_c1. In this regard, a diameter of the first coupling part 217_cyl may be formed to be similar to a diameter of the through-hole formed in the first connecting portion 215_c1.

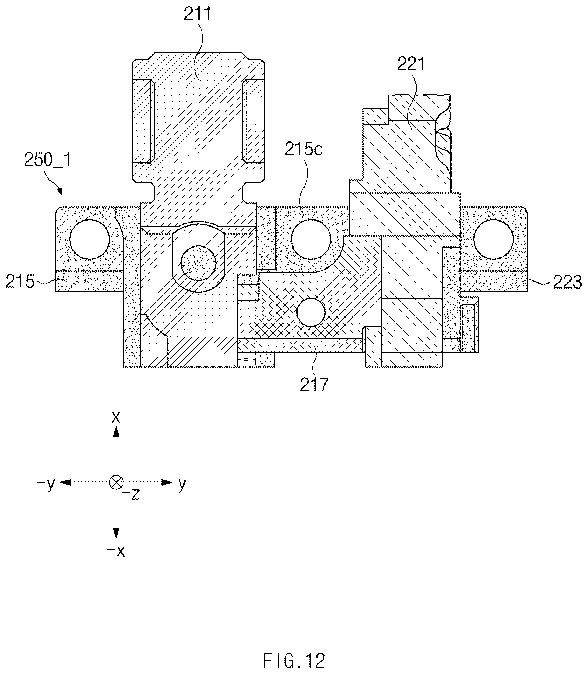

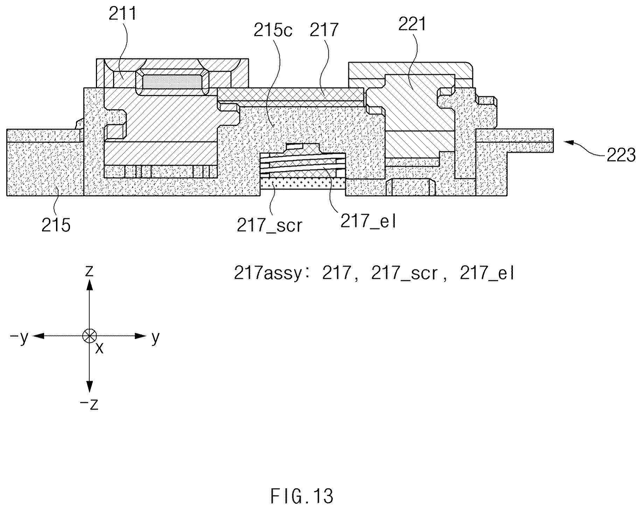

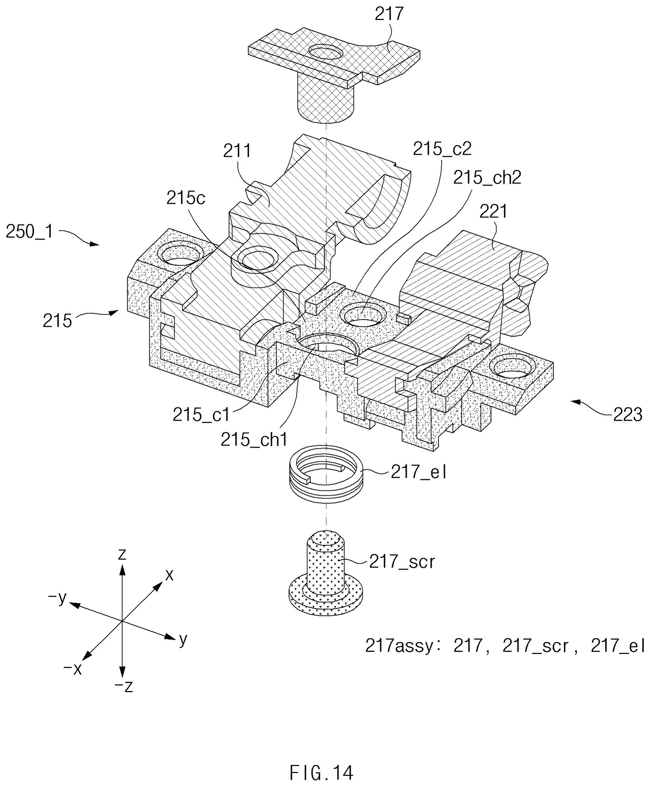

FIG. 12 is a view illustrating an example of an upper surface of a configuration of a first-type hinge structure 201 according to an embodiment. FIG. 13 is a view illustrating an example of a side surface of a configuration of a first-type hinge structure according to an embodiment. FIG. 14 is a view illustrating an example of an exploded state of some components of the first-type hinge structure of FIG. 12.

Referring to FIGS. 1 to 11 described above and FIGS. 12 to 14, some components of a first-type hinge structure according to an embodiment may include a first link member 250_1, a first rotation member 211, a first arm member 221, and a first link cover assembly 217assy.

The first link member 250_1 may include a first link part 215, to which a portion of the first rotation member 211 is fastened, a second link part 223, to which a portion of the first arm member 221 is fastened, and a first link connecting part 215c which connects the first link part 215 and the second link part 223. The first link connecting part 215c may include a first connecting portion 215_c1 and a second connecting portion 215_c2. The first connecting portion 215_c1 may include a first cover coupling hole 215_ch1 which passes from the z axis in the -z-axis direction. The second connecting portion 215_c2 may include a second cover coupling hole 215_ch2 which passes from the z axis in the -z-axis direction. The first cover coupling hole 215_ch1 and the second cover coupling hole 215_ch2 may be disposed in parallel to each other, and may be disposed on the same plane (e.g., on the xy plane). A peripheral portion which surrounds the first connecting portion 215_c1 may be formed higher than a peripheral portion which surrounds the second connecting portion 215_c2 in the z-axis direction. According to an embodiment, a size of the first cover coupling hole 215_ch1 and a size of the second cover coupling hole 215_ch2 may be formed to be different from each other. For example, a size of the first cover coupling hole 215_ch1 may be formed to be greater than a size of the second cover coupling hole 215_ch2. The first coupling part 217_cyl of the first link cover 217 may be inserted into the first cover coupling hole 215_ch1. The second cover coupling hole 215_ch2 may be used to couple the first link member 250_1 to a housing (e.g., the first housing 110 of FIG. 2).

The first link cover assembly 217assy may include a first link cover 217, a first coupling member 217_scr, and a first link elastic member 217_el. The first link cover 217 may be disposed to cover at least a portion of the first link connecting part 215c from the z-axis direction toward the -z-axis direction (or in a rearward direction from a front surface of the display 160). For example, the first link cover 217 may be disposed to cover an upper portion of the first connecting portion 215_c1 (e.g., at least a portion in the z-axis direction). While the first cover body 217_b of the first link cover 217 is positioned on a sidewall which surrounds a periphery of the first connecting portion 215_c1, at least a portion of the first coupling part 217_cyl may be disposed to be inserted into the first cover coupling hole 215_ch1. The first coupling member 217_scr may, for example, protrude in the z-axis direction. For example, the first coupling member 217_scr may be provided in a bolt shape, and may be inserted into the first cover coupling hole 215_ch1 of the first coupling part 217_cyl from the -z-axis direction toward the z-axis direction. The first coupling member 217_scr may be inserted into the first cover coupling hole 215_ch1 and fastened to the first coupling part 217_cyl. After being inserted into the first coupling member 217_scr, the first link elastic member 217_el may be disposed to face a lower surface (e.g., a surface observed from the -z-axis direction) of the first connecting portion 215_c1. As an example, the first link elastic member 217_el may be provided as a spring or a coil-type spring, and may be inserted into the bolt-type first coupling member 217_scr. When the first coupling member 217_scr is coupled to the first coupling part 217_cyl, the first link elastic member 217_el may be disposed between a lower surface of the first connecting portion 215_c1 and one side (e.g., a head portion of a bolt) of the first coupling member 217_scr, to serve to pull the first link cover 217 in the -z-axis direction. Accordingly, the first link cover 217 may maintain a contact state with one side of the first rotation member 211 and one side of the first arm member 221 while pressing one side of the first rotation member 211 and one side of the first arm member 221.

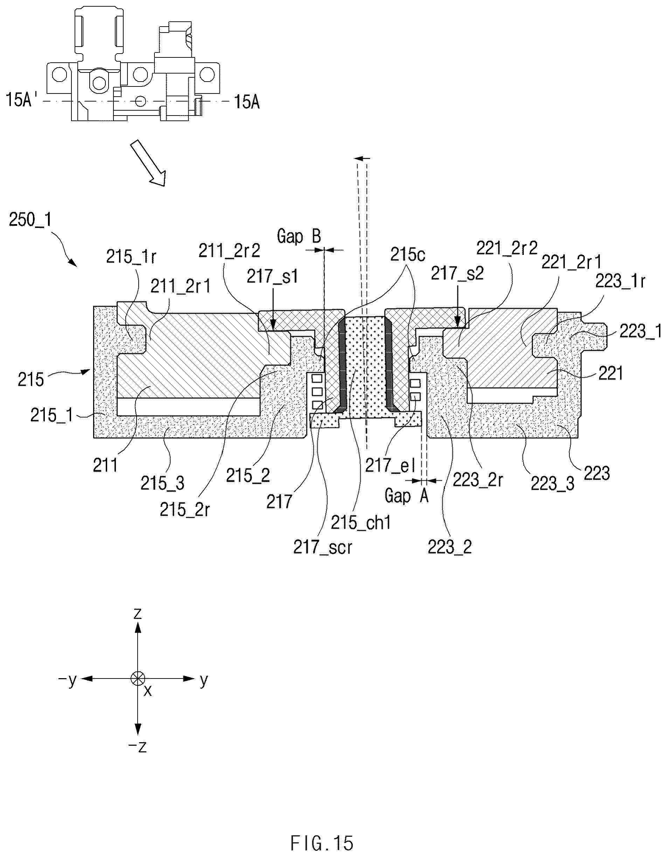

FIG. 15A is a top plan view and FIG. 15B is a cross-sectional view along line 15A'-15A FIG. 15A, of a first-type hinge structure according to an embodiment. As used hereafter, "FIG. 15" may refer to one or more among FIGS. 15A and 15B.

Referring to FIGS. 1 to 15, some components of a first-type hinge structure according to an embodiment may include a first link member 250_1, a first rotation member 211, a first arm member 221, and a first link cover assembly 217assy. A cross-section of the first link member 250_1, taken along a cutting line 15A'-15A, may include a first link part 215, a second link part 223, and a first connecting portion 215_c1 which connects the first link part 215 and the second link part 223, and a first cover coupling hole 215_ch1 may be formed at a central portion of the first connecting portion 215_c1. The first coupling member 217_scr may be coupled to the first cover coupling hole 215_ch1, and the first link elastic member 217_el may be disposed between a lower end of the first connecting portion 215_c1 and one side (e.g., a head of the first coupling member 217_scr) of the first coupling member 217_scr.

The first link part 215 may include at least a first link body 215_3, an eleventh link sidewall 215_1, a twelfth link sidewall 215_2, a first link fixing part 215_4, a first link rail protrusion 215_1r, and a first link step 215_2r. One side of the first rotation member 211 may be fastened to the first link part 215. A predetermined gap may be formed between the first link body 215_3 of the first link part 215 and a rear surface (e.g., a surface which faces the -z-axis direction) of the first rotation member 211. The first link rail protrusion 215_1r of the first link part 215 may be fastened to the first rail groove 211_2r1 of the first rotation member 211, and a portion (e.g., at least a portion of a surface which faces the -z-axis direction) of the first rail protrusion 211_2r2 of the first rotation member 211 may be positioned on the first link step 215_2r of the first link part 215. At least a portion of the first inclined part 217_s1 of the first link cover 217 may be positioned on an upper portion of the first rail protrusion 211_2r2 of the first rotation member 211. As the first link cover 217 is pressed in the -z-axis direction by the first link elastic member 217_el and the first coupling member 217_scr, the first inclined part 217_s1 may be maintained in a contact state with an upper end (e.g., at least a portion which faces the z-axis direction) of the first rail protrusion 211_2r2 while the first rotation member 211 performs a hinge operation. Alternatively, while being pressed by the first link elastic member 217_el and the first coupling member 217_scr, the first inclined part 217_s1 may be disposed to press the first rail protrusion 211_2r2 of the first rotation member 211 in the -z-axis direction.

The second link part 223 may include at least a second link body 223_3, a twenty-first link sidewall 223_1, a twenty-second link sidewall 223_2, a second link rail protrusion 223_1r, and a second link step 223_2r. One side of the first arm member 221 may be fastened to the second link part 223. A predetermined gap may be formed between the second link body 223_3 of the second link part 223 and a rear surface (e.g., a surface which faces the -z-axis direction) of the first arm member 221. The second link rail protrusion 223_1r of the second link part 223 may be fastened to the second rail groove 221_2r1 of the first arm member 221, and a portion (e.g., at least a portion of a surface which faces the -z-axis direction) of the second rail protrusion 221_2r2 of the first arm member 221 may be positioned on the second link step 223_2r of the second link part 223. At least a portion of the second inclined part 217_s2 of the first link cover 217 may be positioned on an upper portion (e.g., at least a portion which faces the z-axis direction) of the second rail protrusion 221_2r2 of the first arm member 221. As the first link cover 217 is pressed in the -z-axis direction by the first link elastic member 217_el and the first coupling member 217_scr, the second inclined part 217_s2 may be maintained in a contact state with an upper end (e.g., at least a portion which faces the z-axis direction) of the second rail protrusion 221_2r2 while the first arm member 221 performs a hinge operation. Alternatively, while being pressed by the first link elastic member 217_el and the first coupling member 217_scr, the second inclined part 217_s2 may be disposed to press at least a portion of the second rail protrusion 221_2r2 of the first arm member 221 in the -z-axis direction.

The first link elastic member 217_el may be disposed while the first inclined part 217_s1 and the second inclined part 217_s2 are disposed such which the first inclined part 217_s1 presses a portion (e.g., an upper end portion observed in the z-axis direction) of the first rail protrusion 211_2r2 of the first rotation member 211 and the second inclined part 217_s2 presses a portion (e.g., an upper end portion observed in the z-axis direction) of the second rail protrusion 221_2r2 of the first arm member 221 in the -z-axis direction, respectively. As an example, when there occurs a thickness deviation of a rail form (e.g., a rail groove or a rail protrusion) of the rotation members 211 and 212 or the arm members 221 and 222, a tilting phenomenon of the link cover may occur. Because a rail thickness may vary from product to product, one side of the link cover which presses the rotation members 211 and 212 and an opposite side of the link cover which presses the arm members 221 and 222 may be non-uniformly formed. In this structure, a foldable electronic device (or a hinge structure) according to an embodiment may provide a first gap (Gap A) between a head of the first coupling member 217_scr and one side (e.g., the twenty-second link sidewall 223_2) of the second link part 223 (or one side of the first link part 215), and may provide a second gap (Gap B) between the first coupling part 217_cyl of the first link cover 217 and one side (e.g., the twelfth link sidewall 215_2) of the first link part 215 (or one side of the second link part 223), so that a tilting phenomenon (or a non-uniform height state) may be improved. The first and second gaps (Gap A and Gap B) may prevent tilting of the first link cover 217, and may contribute to the first link cover 217 uniformly pressing the first rotation member 211 and the first arm member 221 in the z-axis direction.

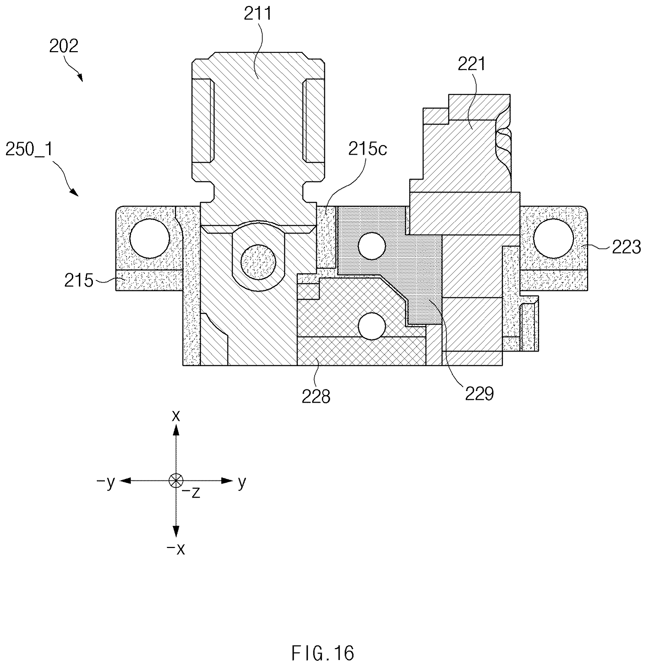

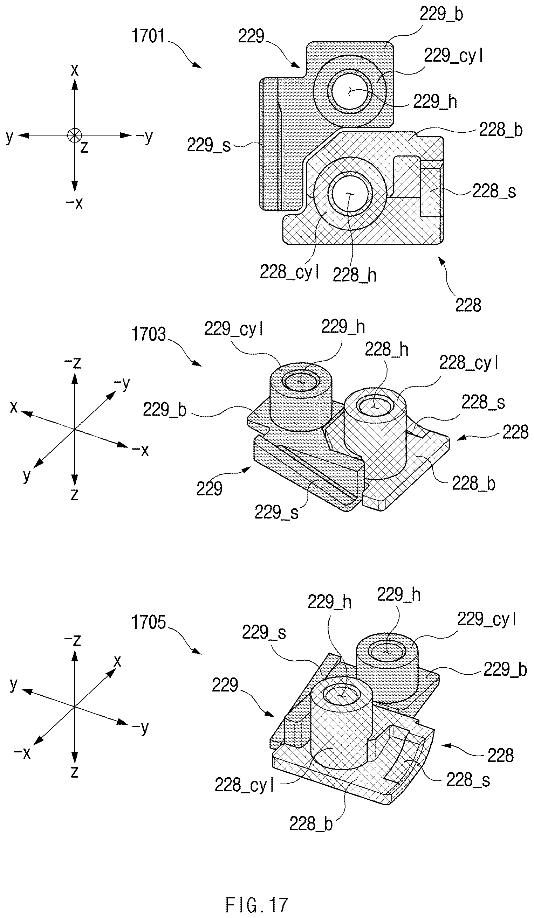

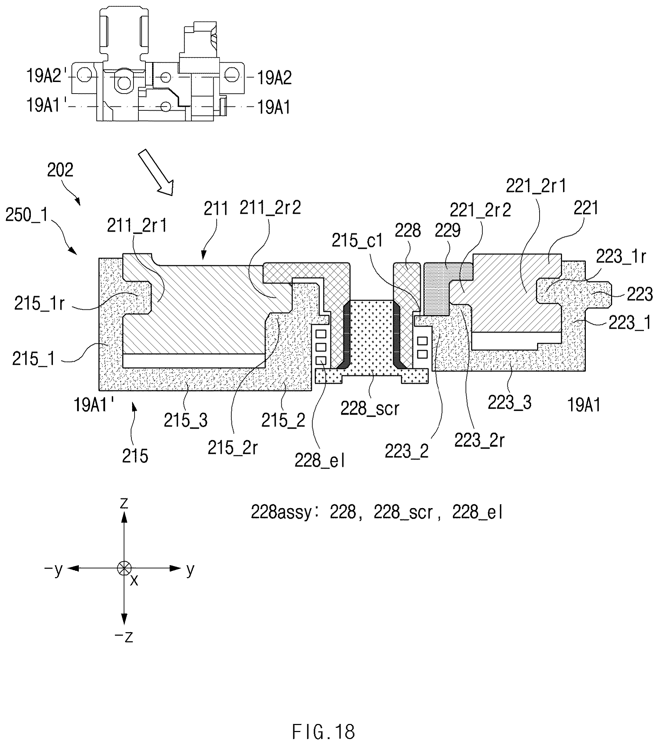

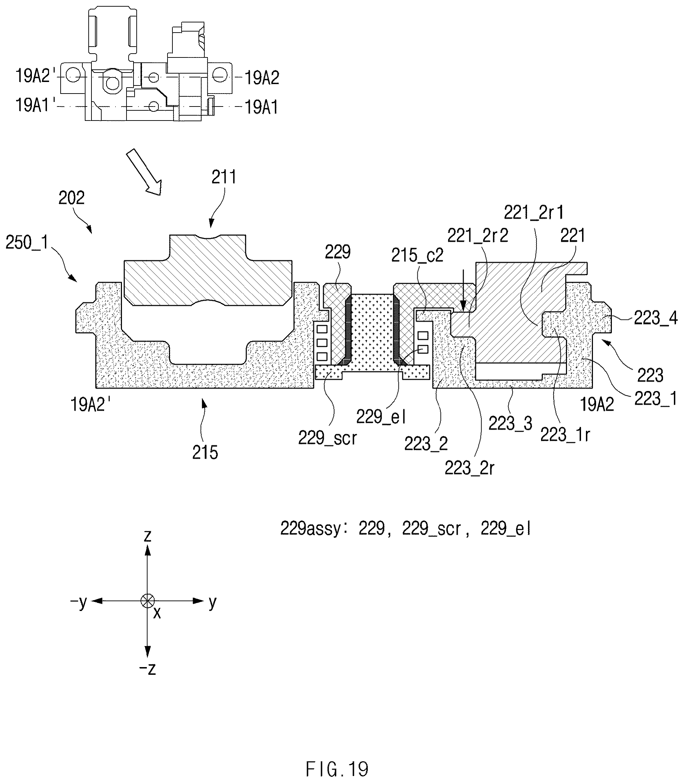

FIG. 16 is a view illustrating an example of a configuration of a second-type hinge structure according to an embodiment. FIG. 17A is a top plan view and FIGS. 17B and 17C are perspective views illustrating a third link cover and a fourth link cover of a second-type hinge structure according to an embodiment. FIG. 18A is a top plan view and FIG. 18B is a cross-sectional view along line 19A1'-19A1 of FIG. 18A of a second-type hinge structure according to an embodiment. FIG. 19A is a top plan view and FIG. 19B is a cross-sectional view along line 19A2'-19A2 of FIG. 19A. As used hereafter, "FIG. 17" may refer to one or more among FIGS. 17A to 17C. As used hereafter, "FIG. 18" may refer to one or more among FIGS. 18A and 18B. As used hereafter, "FIG. 19" may refer to one or more among FIGS. 19A and 19B.

Prior to a description, a second-type hinge structure 202 according to an embodiment of the disclosure may include the same configurations as the first-type hinge structure 201 described above with reference to FIGS. 3 and 4, except for configurations of link cover structures (e.g., a third link cover structure 228assy and a fourth link cover structure 229assy) disposed on the first link member 250_1. Accordingly, the second-type hinge structure 202 described below with reference to FIGS. 16 to 19 will be described focusing on the third and fourth link cover structures 228assy and 229assy. Additionally or alternatively, structures of the third and fourth link cover structures 228assy and 229assy described with reference to FIGS. 16 to 19 may be applied in the same manner to the second link member 250_2 described above with reference to FIGS. 3 and 4. As an example, the second-type hinge structure 202 may further include a fifth link cover structure and a sixth link cover structure, which correspond to the third and fourth link cover structures 228assy and 229assy positioned on the second link member 250_2. Furthermore, a foldable electronic device of the disclosure may include a plurality of hinge structures, and the first-type hinge structure 201 described above with reference to FIGS. 1 to 15 or the second-type hinge structure 202 described with reference to FIGS. 16 to 19 may be applied to each of the hinge structures. Alternatively, even in a single hinge structure, different types of link cover structures may be disposed. For example, a structure may be provided in which the first link member 250_1 and the third and fourth link cover structures 228assy and 229assy, described with reference to FIGS. 16 to 19, are coupled to the first rotation member 211 and the first arm member 221, and a second link cover structure may be disposed to be coupled to the second link member 250_2, to which the second rotation member 212 and the second arm member 222, described above with reference to FIGS. 1 to 15, are coupled at positions which are symmetrical to each other with respect to a folding axis. As an example, although a hinge structure (or a foldable electronic device) including both of the two link cover structures 228assy and 229assy is illustrated in FIGS. 16 to 19, embodiments of the disclosure are not limited thereto. For example, a hinge structure (or a foldable electronic device) of the disclosure may include only any one of the two link cover structures 228assy and 229assy.

Referring to FIGS. 1 to 19, the second-type hinge structure 202 may include at least a first link member 250_1, a first rotation member 211, a first arm member 221, a third link cover structure 228assy, and a fourth link cover structure 229assy. A sliding distance (or a rotation distance) of the first rotation member 211 based on the first link part 215 and a sliding distance (or a rotation distance) of the first arm member 221 based on the second link part 221 may be different from each other. As an example, a sliding distance of the first arm member 221 may be greater than a sliding distance of the first rotation member 211, and correspondingly, a moving speed of the first arm member 221 may be faster than a moving speed of the first rotation member 211. Correspondingly, a frictional force between the first arm member 221 and the second link part 223 may be different from a frictional force between the first rotation member 211 and the first link part 215. In the following description, link cover structures 228assy and 229assy which are disposed to cover the first rotation member 211 and the first arm member 221, respectively, are provided, so that discomfort caused by non-uniform frictional forces (e.g., a degraded operational feel or noise generation during a hinge operation of a foldable electronic device) may be improved.

The first link member 250_1 may include the same structure as the first link member described above in FIGS. 3 to 15. For example, the first link member 250_1 may include a first link part 215, to which one side of the first rotation member 211 is fastened, a second link part 223, to which one side of the first arm member 221 is fastened, and a first link connecting part 215c which connects the first link part 215 and the second link part 223.

The first rotation member 211 may include at least a first rail protrusion 211_2r2 and a first rail groove 211_2r1. Additionally or alternatively, as described above, the first rotation member 211 may include a first rotation body, a first rail structure, and a second rail structure (e.g., the first rotation body 211_3, the first rail structure 211_1, and the second rail structure 211_2 of FIG. 5), and the first rail protrusion 211_2r2 and the first rail groove 21 1_2r1 may be disposed on side surfaces of the second rail structure, respectively.

The first arm member 221 may include at least a second rail protrusion 221_2r2 and a second rail groove 221_2r1. Additionally or alternatively, as described above, the first arm member 221 may include a first arm body, a first arm part, and a second arm part (e.g., the first arm body 221_3, the first arm part 221_1, and the second arm part 221_2 of FIG. 5), and the second rail protrusion 221_2r2 and the second rail groove 221_2r1 may be disposed on a side surface of the second arm part, respectively.

In FIG. 17, state 1701 illustrates a state in which the third link cover 228 and the fourth link cover 229 are observed in the -z-axis direction, state 1703 illustrates a first-direction perspective view of the third link cover 228 and the fourth link cover 229, and state 1705 illustrates a second-direction perspective view of the third link cover 228 and the fourth link cover 229.

Referring to FIGS. 16 to 17, the third link cover 228 may include a third cover body 228_b and a third coupling part 228_cyl.

At least a portion of a lower surface (e.g., a surface which faces the -z-axis direction) of the third cover body 228_b may include a flatly formed portion, and another portion thereof may be inclined. For example, a -y-axis periphery of the third cover body 228_b may include a third inclined part 228_s (or a third curved portion), and at least a remaining portion may be flatly formed. The third inclined part 228_s may be disposed to cover at least a portion of an upper end of the first rail protrusion 211_2r2 formed in the first rotation member 211. The third inclined part 228_s may include a shape which is convex from the -z-axis direction toward the z-axis direction. Alternatively, when observed in the -z-axis direction, the third inclined part 228_s may include a concave shape. An inclination (or a curvature) of the third inclined part 228_s may be formed to correspond to an inclination (or a curvature) of the first rail protrusion 211_2r2 (to have the same curvature or a curvature which is similar thereto within a specific error range). The third coupling part 228_cyl may be formed at a central portion of the third cover body 228_b to protrude in the -z-axis direction. The third coupling part 228_cyl may be provided in a cylindrical shape, and a third coupling hole 228_h may be formed to pass through the third coupling part 228_cyl and the third cover body 228_b from the z-axis direction toward the -z-axis direction. The third coupling part 228_cyl may have a size corresponding to a through-hole formed in the first connecting portion 215_c1. A periphery shape of the third cover body 228_b in the x-axis direction and the y-axis direction may be formed to be engaged with a periphery of the fourth cover body 229_b.

At least a portion of a lower surface (e.g., a surface which faces the -z-axis direction) of the fourth cover body 229_b may include a flatly formed portion, and another portion thereof may be inclined. For example, a y-axis periphery of the fourth cover body 229_b may include a fourth inclined part 229_s (or a fourth curved portion), and at least a remaining portion may be flatly formed. The fourth inclined part 229_s may include a shape which is inclined from the -z-axis direction toward the z-axis direction. The fourth inclined part 229_s may be disposed to cover at least a portion of an upper end of the second rail protrusion 221_2r2 formed in the first arm member 221. An inclination (or a curvature) of the fourth inclined part 229_s may be formed to correspond to an inclination (or a curvature) of the second rail protrusion 221_2r2 (to have the same curvature or a curvature which is similar thereto within a specific error range). The fourth coupling part 229_cyl may be formed at one side of the fourth cover body 229_b to protrude in the -z-axis direction. The fourth coupling part 229_cyl may be provided in a cylindrical shape, and a fourth coupling hole 229_h may be formed to pass through the fourth coupling part 229_cyl and the fourth cover body 229_b from the z-axis direction toward the -z-axis direction. The fourth coupling part 229_cyl may have a size corresponding to a through-hole formed in the second connecting portion 215_c2. A periphery shape of the fourth cover body 229_b in the -x-axis direction and the y-axis direction may be formed to be engaged with a periphery of the fourth cover body 229_b in the x-axis direction and the y-axis direction. A diameter of the third coupling hole 228_h and a diameter of the fourth coupling hole 229_h may be formed to be the same as or similar to each other, but may vary depending on a design change. A height of the third coupling part 228_cyl which protrudes from an upper surface (e.g., a surface which faces the z-axis direction) of the third cover body 228_b may be formed to be the same as or similar to a height of the fourth coupling part 229_cyl formed in the fourth link cover 229. Alternatively, the third coupling part 228_cyl and the fourth coupling part 229_cyl may be formed to have different heights.

Referring to FIGS. 16 to 18, the first link part 215 may include, for example, at least a first link body 215_3, an eleventh link sidewall 215_1, a twelfth link sidewall 215_2, a first link rail protrusion 215_1r, and a first link step 215_2r (or a first auxiliary rail). The first link connecting part 215c may include a first connecting portion 215_c1, to which the third link cover assembly 228assy is coupled. The third link cover assembly 228assy may include a third link cover 228, a third coupling member 228_scr, and a third link elastic member 228_el.

The first rail groove 211_2r1 of the first rotation member 211 may be fastened to the first link rail protrusion 215_1r formed on the eleventh link sidewall 215_1. The first rail protrusion 211_2r2 of the first rotation member 211 may be positioned on an upper portion of the first link step 215_2r formed on the twelfth link sidewall 215_2. The third inclined part 228_s of the third link cover 228 may be disposed to cover an upper portion (e.g., at least a portion which faces the z-axis direction) of the first rail protrusion 211_2r2. The third link cover 228 may be coupled to the third coupling member 228_scr with the first connecting portion 215_c1 interposed therebetween. The third coupling member 228_scr may include a bolt shape. The third link elastic member 228_el may be disposed between the third link cover 228 and a header of the third coupling member 228_scr, or between a lower surface (e.g., a surface which faces the -z-axis direction) of the first connecting portion 215_c1 and a portion (e.g., a header portion) of the third coupling member 228_scr. The third link elastic member 228_el may perform a role of pulling the third link cover 228 in the -z-axis direction. The third inclined part 228_s of the third link cover 228 may maintain a contact state with the first rail protrusion 211_2r2, while the first rotation member 211 performs a hinge operation or is maintained in a specific holding state, by a pulling force, such as a tensile force or a compressive force, of the third link elastic member 228_el.

Referring to FIGS. 16 to 19, the second link part 223 may include, for example, at least a second link body 223_3, a twenty-first link sidewall 223_1, a twenty-second link sidewall 223_2, a second link rail protrusion 223_1r, and a second link step 223_2r (or a second auxiliary rail). The first link connecting part 215c may include a second connecting portion 215_c2, to which the fourth link cover assembly 229assy is coupled. The fourth link cover assembly 229assy may include a fourth link cover 229, a fourth coupling member 229_scr, and a fourth link elastic member 229_el.

The second rail groove 221_2r1 of the first arm member 221 may be fastened to the second link rail protrusion 223_1r formed in the twenty-first link sidewall 223_1. The second rail protrusion 221_2r2 of the first arm member 221 may be disposed on an upper portion of the second link step 223_2r formed in the twenty-second link sidewall 223_2. The fourth inclined part 229_s of the fourth link cover 229 may be disposed to cover an upper portion (e.g., at least a portion which faces the z-axis direction) of the second rail protrusion 221_2r2. The fourth link cover 229 may be coupled to the fourth coupling member 229_scr with the second connecting portion 215_c2 interposed therebetween. The fourth coupling member 229_scr may include a bolt shape. The fourth link elastic member 229_el may be disposed between the fourth link cover 229 and a header of the fourth coupling member 229_scr, or between a lower surface (e.g., a surface which faces the -z-axis direction) of the second connecting portion 215_c2 and a portion (e.g., a header portion) of the fourth coupling member 229_scr. The fourth link elastic member 229_el may perform a role of pulling the fourth link cover 229 in the -z-axis direction. The fourth inclined part 229_s of the fourth link cover 229 may maintain a contact state with the second rail protrusion 221_2r2, while the first arm member 221 performs a hinge operation or is maintained in a specific holding state, by a pulling force (e.g., a compressive force) of the fourth link elastic member 229_el.

As described above, the third link cover 228 of the third link cover assembly 228assy may be disposed to maintain a contact state with the first rail protrusion 211_2r2 of the first rotation member 211, based on the third link elastic member 228_el, and the fourth link cover 229 of the fourth link cover assembly 229assy may be disposed to maintain a contact state with the second rail protrusion 221_2r2 of the first arm member 221, based on the fourth link elastic member 229_el. In the above-described arrangement, because the third link cover assembly 228assy and the fourth link cover assembly 229assy are independently provided, contact between each of the first rotation member 211 and the first arm member 221 and the corresponding link cover may be maintained more stably, without affecting each other. Each link elastic member included in the above-described link cover assemblies 228assy and 229assy may be configured to have a different magnitude of elastic force, in response to a situation of a corresponding structure (e.g., the first rotation member 211 or the first arm member 221). As an example, an elastic force of a link elastic member included in the third link cover assembly 228assy may be set to be greater (or smaller) than an elastic force of a link elastic member included in the fourth link cover assembly 229assy. With respect to setting elastic forces of different magnitudes, a type of an elastic member applied to the third link cover assembly 228assy may be different from a type of an elastic member applied to the fourth link cover assembly 229assy. Even when elastic members of the same type are applied to the respective link cover assemblies, sizes of the elastic members applied to the respective link cover assemblies, or ratios at which elastic members of different types are applied, may be different. Based on the above-described structure, a hinge structure of the disclosure may provide a pressure required for each configuration related to improvement of a hinge operation, by differently implementing a magnitude of a force pressing the rotation members 211 and 212 and a magnitude of a force pressing the arm members 221 and 222.

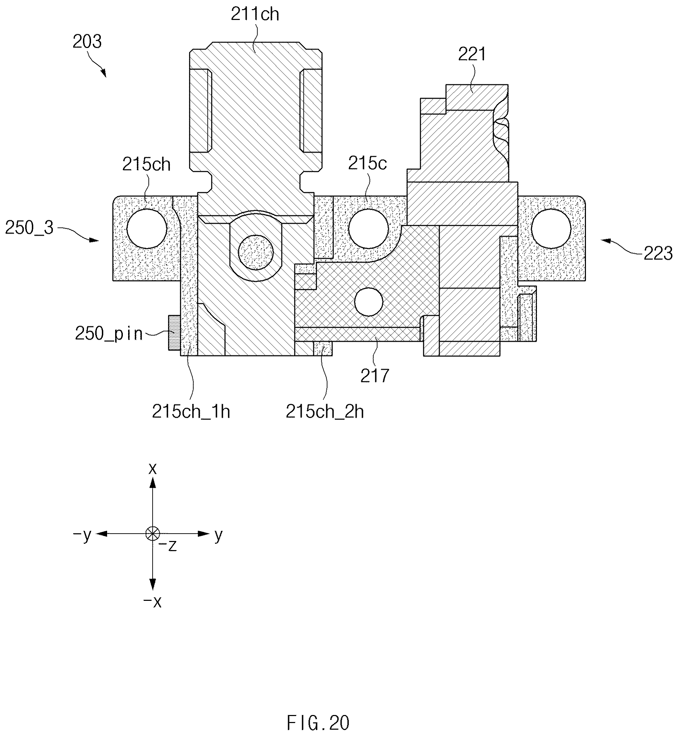

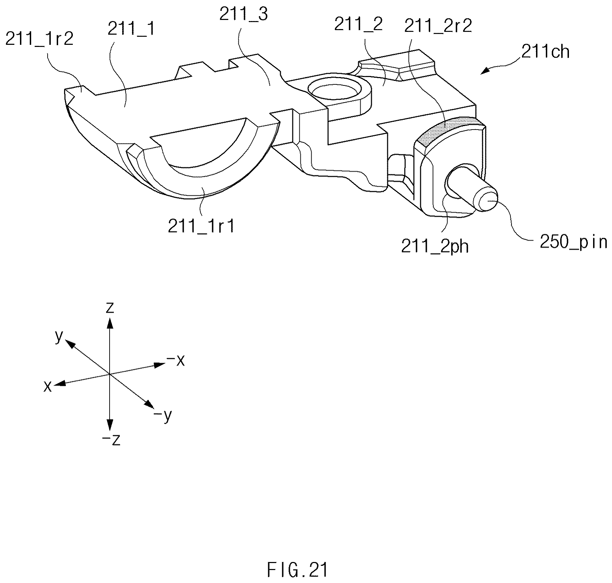

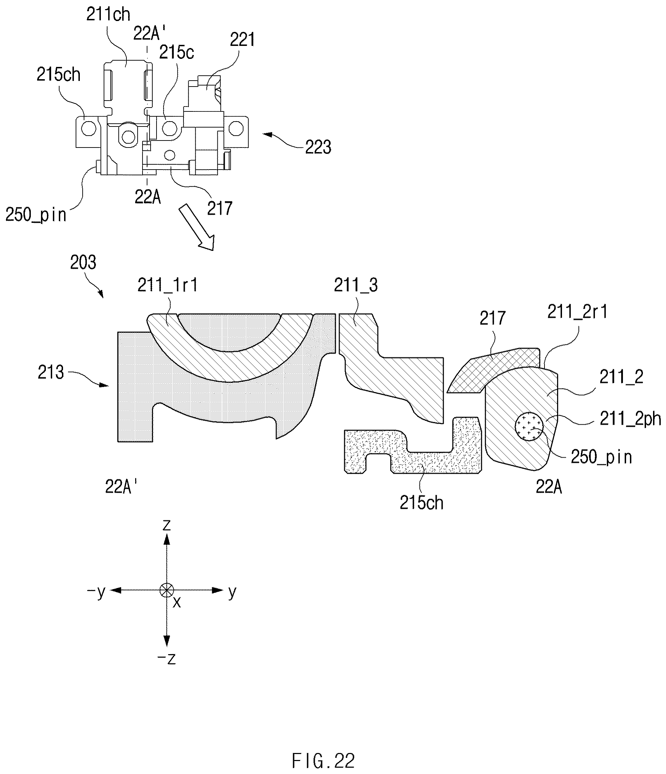

FIG. 20 is a view illustrating an example of a configuration of a third-type hinge structure according to an embodiment. FIG. 21 is a view illustrating an example of a third rotation member according to an embodiment. FIG. 22A is a top plan view and FIG. 22B is a cross-sectional view along line 22A'-22A of FIG. 22A. As used hereafter, "FIG. 22" may refer to one or more among FIGS. 22A and 2B.

Referring to FIGS. 20 to 22, a third-type hinge structure 203 according to an embodiment may include at least a third link member 250_3, a first modified rotation member 211ch, and a first arm member 221. The third-type hinge structure 203 may further include other configurations of the hinge structure described above with reference to FIGS. 3 and 4, except for the third link member 250_3, the first modified rotation member 211ch, and the first arm member 221. The third-type hinge structure 203 described below may be applied to other hinge structures described above with reference to FIGS. 1 to 19 in the same or a similar manner, or in a repeated manner.

The third link member 250_3 may include a first modified link part 215ch, a second link part 223, and a first link connecting part 215c. The third link member 250_3 described above may include the same or a similar configuration as the first link member 250_1 described above with reference to FIG. 6, except for the first modified link part 215ch. For example, the second link part 223 of the third link member 250_3 may have the same or a similar configuration as the second link part 223 of the first link member 250_1, and the first link connecting part 215c of the third link member 250_3 may have the same or a similar configuration as the first link connecting part 215c of the first link member 250_1. The first link cover 217 disposed on the first link connecting part 215c may have the same or a similar configuration as the first link cover described above in FIG. 5, and the third-type hinge structure 203 may further include a coupling member and a link elastic member (e.g., the first coupling member 217_scr and the first link elastic member 217_el described in FIG. 5), in relation to disposition of the first link cover 217.

Referring to FIGS. 7, 8, and 21, the first modified rotation member 211ch may include a first rotation body 211_3, a first rail structure 211_1, a second rail structure 211_2, and a rail pin 250_pin (or a rotational real shaft of the second rail structure 211_2). The first rotation body 211_3 and the first rail structure 211_1 may have the same or a similar structure as the first rotation body 211_3 and the first rail structure 211_1 of the first rotation member 211 described above in FIGS. 7 and 8. For example, the first rail structure 211_1 may include a first rotation rail 211_1r1 and a second rotation rail 211_1r2 which extend from the first rotation body 211_3 toward the x-axis direction, and are formed on respective side surfaces (e.g., surfaces which face the y-axis direction and the -y-axis direction), to be inserted into fixing rail grooves 213a and 213a2 formed in the fixing bracket 213. A first rail protrusion 211_2r2 may be disposed on one side surface (e.g., a surface which faces the -y-axis direction) of the second rail structure 211_2. The first rail protrusion 211_2r2 may be formed to protrude from a -y-axis side surface of a central portion of the second rail structure 211_2 toward the - y-axis direction by a specific thickness. Additionally, the second rail structure 211_2 may further include a first rail groove (e.g., a rail groove which is the same as the first rail groove 211_2r1 described in FIG. 7). The first rail groove may be disposed on a y-axis side surface of the second rail structure 211_2. Meanwhile, in FIG. 21, a structure, in which the first rail protrusion 211_2r2 is disposed on a -y-axis side surface of the second rail structure 211_2, and the first rail groove is disposed on a y-axis side surface of the second rail structure 211_2, is illustrated, but the disclosure is not limited thereto. For example, the first rail protrusion 211_2r2 may be disposed on a y-axis side surface of the second rail structure 211_2, and the first rail groove may be disposed on a -y-axis side surface of the second rail structure 211_2. Depending on a disposition of a rail groove or a rail protrusion of the first modified rotation member 211ch, positions of a link rail protrusion and a link step formed in the first link part 215 may be changed.

According to an embodiment, the second rail structure 211_2 may include a rail through-hole 211_2ph which passes from one side surface (e.g., a side surface which faces the -y-axis direction) to an opposite side surface (e.g., a side surface which faces the y-axis direction), and a rail pin 250_pin, at least a portion of which is inserted into the rail through-hole 211_2ph. A diameter of the rail through-hole 211_2ph may be formed to be the same as or similar to a diameter of the rail pin 250_pin.

The rail pin 250_pin may be disposed to pass from one side surface (e.g., a side surface of the first modified link part 215ch which is disposed to face the -y-axis direction) of the first modified link part 215ch to an opposite side surface (e.g., a side surface of the first modified link part 215ch which is disposed to face the second link part 223).

Referring to FIGS. 6, 20, and 22, the first modified link part 215ch may include an eleventh modified link sidewall 215ch_1h and a twelfth modified link sidewall 215ch_2h, and holes which pass from the -y-axis direction toward the y-axis direction, into which at least a portion of the rail pin 250_pin may be inserted, may be formed in the eleventh modified link sidewall 215ch_1h and the twelfth modified link sidewall 215ch_2h, respectively. Additionally, the first modified link part 215ch may further include a first link body which connects the eleventh modified link sidewall 215ch_1h and the twelfth modified link sidewall 215ch_2h. In the first modified link part 215ch, the holes formed in the eleventh modified link sidewall 215ch_1h and the twelfth modified link sidewall 215ch_2h may be formed to be longer in the x-axis direction than in the z-axis direction, and may provide a space, in which the rail pin 250_pin may be slid by a specific distance.

Although a separate link elastic member and a coupling member are not illustrated in FIG. 22, as illustrated in FIG. 14, the third link member 250_3 may further include a coupling member (e.g., having the same configuration as the first coupling member 217_scr of FIG. 14) and a link elastic member (e.g., having the same configuration as the first link elastic member 217_el of FIG. 14). Accordingly, while the first rotation rail 211_1r1 of the first modified rotation member 211ch is inserted into the fixing bracket 213 (e.g., the first fixing rail groove 213a1 of FIG. 3), and the rail pin 250_pin is inserted into the rail through-hole 211_2ph formed in the second rail structure 211_2 of the first modified rotation member 211ch and fastened to the sidewalls of the first modified link part 215ch, the first link cover 217 may be maintained in a contact state with one side of the first rail protrusion 211_2r2 of the first modified rotation member 211ch.

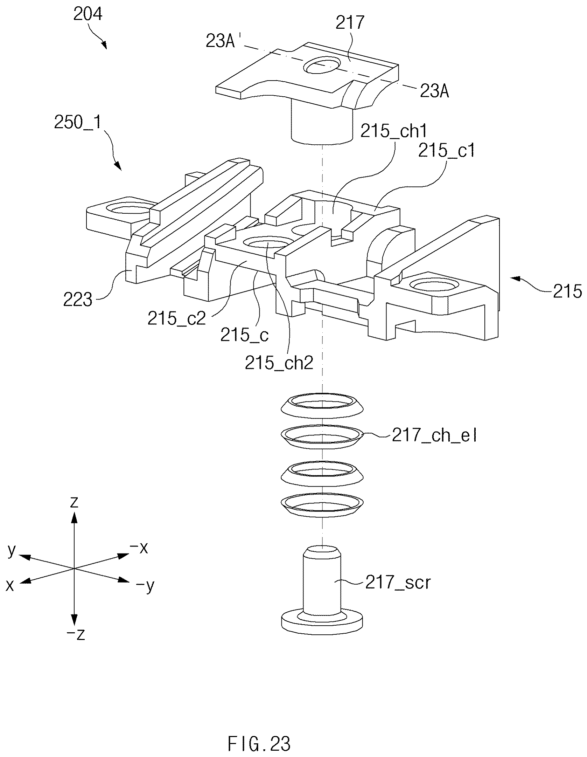

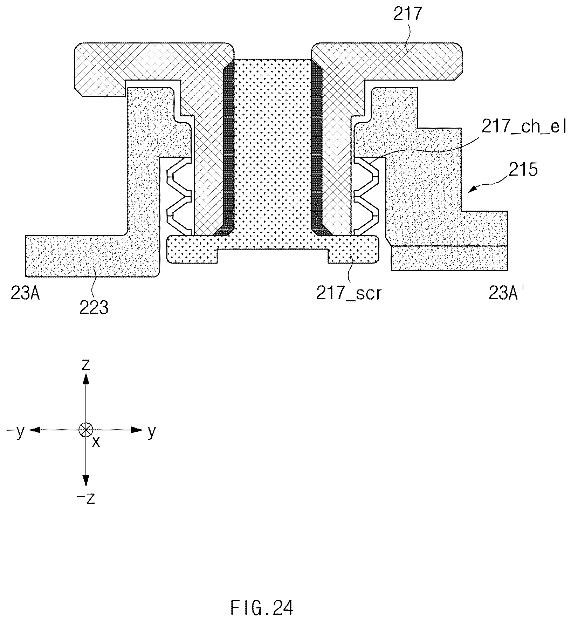

FIG. 23 is a view illustrating an example of a configuration of a fourth-type hinge structure according to an embodiment. FIG. 24 is a view illustrating an example of a cross-section of a fourth-type hinge structure according to an embodiment, taken along cutting line 23A-23A'.

Referring to FIGS. 23 and 24, at least a portion of a fourth-type hinge structure 204 according to an embodiment may include the first link member 250_1 and a modified link cover assembly 217ch_assy. Additionally, the fourth-type hinge structure 204 may further include some components of the hinge structures described above in FIGS. 3 to 22. For example, the fourth-type hinge structure 204 may further include a first rotation member 211 which is coupled to the first link part 215 of the first link member 250_1, and a first arm member 221 which is coupled to the second link part 223.

The first link member 250_1 may include a first link part 215, a second link part 223, and a first link connecting part 215c. A portion of the first rotation member (e.g., the first rotation member 211 described in FIG. 3) may be fastened to the first link part 215, and a first arm member (e.g., the first arm member described in FIG. 3) may be fastened to the second link part 223. The first link connecting part 215c may include a first connecting portion 215_c1 including a first cover coupling hole 215_ch1, into which one side of the first link cover 217 is inserted, and a second connecting portion 215_c2 including a second cover coupling hole 215_ch2 which is adjacent to or connected to the first connecting portion 215_c1. The first link part 215, the second link part 223, and the first link connecting part 215c may have a structure which is the same as or similar to the structure described above in FIG. 6.

The modified link cover structure 217ch_assy may include the first link cover 217, the first coupling member 217_scr, and a modified elastic member 217_ch_el. In the modified link cover structure 217ch_assy, the first link cover 217 and the first coupling member 217_scr may have a structure which is the same as or similar to the first link cover and the first coupling member described above in FIGS. 11 and 14.

The modified elastic member 217_ch_el may include at least one disk spring. The modified elastic member 217_ch_el may have a structure which is different from a coil shape of the first link elastic member 217_el illustrated above in FIGS. 13 to 15. As an example, the modified elastic member 217_ch_el may provide a higher elastic force than the first link elastic member 217_el. Meanwhile, a shape of the modified elastic member 217_ch_el is provided to illustrate that a hinge structure of the disclosure is not limited to a shape of a link elastic member, and the modified elastic member 217_ch_el may include both a disk spring and a coil spring. The above-described modified elastic member 217_ch_el may be applied to at least some of other hinge structures described above in FIGS. 1 to 22.

Based on at least some of the above-described embodiments, in a configuration of an embodiment of the disclosure, a foldable electronic device of the disclosure may include a display 160, a first housing 110 and a second housing 120, in which at least a portion of the display is received, and at least one hinge structure 200a and 200b coupling the first housing and the second housing, and a hinge housing 150, in which the at least one hinge structure is seated. The at least one hinge structure may include a first rotation member 211 rotated around a first axis, a first arm member 221 rotated in response to rotation of the first rotation member, a second rotation member 212 rotated around a second axis, a second arm member 222 rotated in response to rotation of the second rotation member, and a first link member 250_1 fastened to the first rotation member and the first arm member. The first rotation member may include a first rail protrusion 211_2r2 formed on a first side surface of the first rotation member, and a first rail groove 211_2r1 formed on a second side surface of the first rotation member disposed on an opposite direction to the first side surface, the first rail protrusion may protrude from a surface of the first side surface, and the first rail groove may be recessed from a surface of the second side surface.

According to an embodiment, the first link member may include a first link part 215 fastened to the first rotation member, a second link part 223 fastened to the first arm member, and a first link connecting part 215c connecting the first link part and the second link part, and the first link part may further include a first link body 215_3, a first sidewall 215_1 formed at a periphery of one side of the first link body, and in which a first link rail protrusion fastened to the first rail groove is formed, and a second sidewall 215_2 formed at a periphery of an opposite side of the first link body, and in which a first link step facing one surface of the first rail protrusion is formed.

According to an embodiment, the foldable electronic device may further include a first link cover structure 228assy disposed to press a portion of the first rotation member toward the first housing.

According to an embodiment, the first link cover structure may include a first link cover 228 disposed on the first link connecting part, and disposed to cover a portion of the first rail protrusion, a first coupling member 228_scr fastened to the first link cover, and a first link elastic member 217_el disposed between the first link connecting part and one side of the first coupling member.

According to an embodiment, the first link elastic member may include at least one of a disc spring and a coil spring.

According to an embodiment, the first link cover may include a first inclined part 217_s1 facing one side of the first rail protrusion.

According to an embodiment, a first curvature of the first inclined part may be formed to be the same as a curvature of the first rail protrusion.

According to an embodiment, the first arm member further include a first arm body 221_3, a first arm part 221_1 formed in a first direction from the first arm body, and a second arm part 221_2 formed in a second direction from the first arm body and fastened to the second link part, and the second arm part may further include a second rail groove 221_2r1 formed on a first side surface of the second arm part, and a second rail protrusion 221_2r2 formed on a second side surface of the second arm part.

According to an embodiment, the second link part may include a second link body 223_3, a third sidewall 223_1 formed at a periphery of one side of the second link body, and in which a second link rail protrusion 223_1r fastened to the second rail groove is formed, and a fourth sidewall 223_2 formed at a periphery of an opposite side of the second link body, and in which a second link step 223_2r fastened to the second rail protrusion is formed.

According to an embodiment, the foldable electronic device 100 may include a second link cover structure 229assy disposed to press a portion of the first arm member toward the first housing.

According to an embodiment, the second link cover structure may include a second link cover 229 disposed on the first link connecting part, and disposed to cover a portion of the second rail protrusion, a second coupling member 229_scr fastened to the second link cover, and a second link elastic member 229_el disposed between the first link connecting part and one side of the second coupling member.

According to an embodiment, the first link cover may include a second inclined part 229_s covering one side of an upper portion of the second rail protrusion.

According to an embodiment, a second curvature of the second inclined part may be formed to be the same as a curvature of the second rail protrusion.

According to an embodiment, the first arm member may include a first arm body 221_3, a first arm part 221_1 formed in a first direction from the first arm body, and a second arm part 221_2 formed in a second direction from the first arm body and fastened to the second link part, and the second arm part may include a second rail groove 221_2r1 formed on a first side surface of the second arm part, and a second rail protrusion 221_2r2 formed on a second side surface of the second arm part, the first link member may include a first link part 215 fastened to the first rotation member, a second link part 221 fastened to the first arm member, and a first link connecting part 215c connecting the first link part and the second link part, and the first link part may include a first link body 215_3, a first sidewall 215_1 formed at a periphery of one side of the first link body, and in which a first link rail protrusion 215_1r fastened to the first rail groove is formed, and a second sidewall 215_2 formed at a periphery of an opposite side of the first link body, and in which a first link step 215_2r facing one surface of the first rail protrusion is formed, and the second link part may include a second link body 223_3, a third sidewall 223_1 formed at a periphery of one side of the second link body, and in which a second link rail protrusion 223_1r fastened to the second rail groove is formed, and a fourth sidewall 223_2 formed at a periphery of an opposite side of the second link body, and in which a second link step 223_2r fastened to the second rail protrusion is formed.

According to an embodiment, the foldable electronic device may further include a link cover structure 217assy disposed to press a portion of the first rotation member and a portion of the first arm member toward the first housing.

According to an embodiment, the link cover structure may include a link cover 217 disposed to cover a portion of the first rail protrusion and a portion of the second rail protrusion, a coupling member 217_scr fastened to the link cover, and a first link elastic member 217_el disposed between the link connecting part and one side of the coupling member.

According to an embodiment, the first link cover may include a first inclined part 217_s1 facing one side of the first rail protrusion, and a second inclined part 217_s2 facing one side of the second rail protrusion, and a curvature of the first inclined part may be different from a curvature of the second inclined part.

According to an embodiment, the curvature of the first inclined part may be greater than the curvature of the second inclined part.

According to an embodiment, the first rotation member may further include a through-hole 211_2ph which passes through the first side surface and the second side surface, the first link member may include a first link part 215 fastened to the first rotation member, a second link part 223 fastened to the first arm member, and a first link connecting part 215c connecting the first link part and the second link part, and the first link part may include a first link body 215_3, a first sidewall 215_1 formed at a periphery of one side of the first link body, and in which a first link rail protrusion 215_1r fastened to the first rail groove is formed, and a second sidewall 215_2 formed at a periphery of an opposite side of the first link body, and in which a first link step 215_2r facing one surface of the first rail protrusion is formed, a first hole formed on one side of the first sidewall and a second hole formed in the second sidewall, and a rail pin 250_pin disposed to pass through the first hole, the second hole, and the through-hole.

According to an embodiment, the foldable electronic device may include a fixing bracket 213 disposed in the hinge housing, and the fixing bracket may include a bracket body 213a3. a first fixing rail groove 213a1 formed in the bracket body and coupled to a portion of the first rotation member 211, and a second fixing rail groove 213a2 formed in the bracket body and coupled to a portion of the second rotation member 212.

A hinge structure according to an embodiment may include a first rotation member 211 rotated around a first axis, a first arm member 221 rotated in response to rotation of the first rotation member, a second rotation member 212 rotated around a second axis, a second arm member 222 rotated in response to rotation of the second rotation member, and a first link member 250_1 fastened to the first rotation member and the first arm member, the first rotation member may include a first rail protrusion 211_2r2 formed on a first side surface of the first rotation member, and a first rail groove 211_2r1 formed on a second side surface of the first rotation member disposed on an opposite direction to the first side surface, the first rail protrusion may protrude from a surface of the first side surface, and the first rail groove may be recessed from a surface of the second side surface.

According to an embodiment, the electronic device of various embodiments disclosed in the disclosure may include a mobile electronic device, and may be provided as being included in a computer program product related to the operation of the mobile electronic device. The computer program product may be traded between a seller and a buyer as a product. The computer program product may be distributed in the form of a machine-readable storage medium (e.g., compact disc read only memory (CD-ROM)) or may be distributed (e.g., downloaded or uploaded), through an application store (e.g., PlayStore^{™}), directly between two user devices (e.g., smartphones), or online. In the case of on-line distribution, at least part of the computer program product may be at least temporarily stored in the machine-readable storage medium such as the memory of a manufacturer's server, an application store's server, or a relay server or may be generated temporarily.

According to various embodiments, each component (e.g., a module or a program) of the above-described components may include a single entity or a plurality of entities, and some of the plurality of objects may be separately arranged on other components. According to various embodiments, one or more components of the above-described components or operations may be omitted, or one or more other components or operations may be added. Alternatively or additionally, a plurality of components (e.g., a module or a program) may be integrated into one component. In this case, the integrated component may perform one or more functions of each component of the plurality of components in the manner same as or similar to being performed by the corresponding component of the plurality of components prior to the integration. According to various embodiments, operations executed by modules, programs, or other components may be executed by a successive method, a parallel method, a repeated method, or a heuristic method. Alternatively, at least one or more of the operations may be executed in another order or may be omitted, or one or more operations may be added. While the disclosure has been shown and described with reference to various embodiments thereof, it will be understood by those skilled in the art which various changes in form and details may be made therein without departing from the spirit and scope of the disclosure as defined by the appended claims and their equivalents.

## Claims

1. A foldable electronic device comprising:
a display (160);
a first housing (110) and a second housing (120), in which at least a portion of the display is received; and
at least one hinge structure (200a, 200b) coupling the first housing and the second housing; and
a hinge housing (150), in which the at least one hinge structure is seated,
wherein the at least one hinge structure includes:
a first rotation member (211) rotated around a first axis;
a first arm member (221) rotated in response to rotation of the first rotation member;
a second rotation member (212) rotated around a second axis;
a second arm member (222) rotated in response to rotation of the second rotation member; and
a first link member (250_1) fastened to the first rotation member and the first arm member,
wherein the first rotation member includes:
a first rail projection (211_2r2) formed on a first side surface of the first rotation member; and
a first rail groove (211_2r1) formed on a second side surface of the first rotation member disposed on an opposite direction to the first side surface,
wherein the first rail projection protrudes from a surface of the first side surface, and
wherein the first rail groove is recessed from a surface of the second side surface.

2. The foldable electronic device of claim 1, wherein the first link member includes:
a first link part (215) fastened to the first rotation member;
a second link part (223) fastened to the first arm member; and
a first link connecting part (215c) connecting the first link part and the second link part,
and
wherein the first link part includes:
a first link body (215_3);
a first sidewall (215_1) formed at a periphery of one side of the first link body, and in which a first link rail projection fastened to the first rail groove is formed; and
a second sidewall (215_2) formed at a periphery of an opposite side of the first link body, and in which a first link step facing one surface of the first rail projection is formed.

3. The foldable electronic device of claim 2, further comprising:
a first link cover structure (228assy) disposed to press a portion of the first rotation member toward the first housing.

4. The foldable electronic device of claim 3, wherein the first link cover structure includes:
a first link cover (228) disposed on the first link connecting part, and disposed to cover a portion of the first rail projection;
a first coupling member (228_scr) fastened to the first link cover; and
a first link elastic member (217_el) disposed between the first link connecting part and one side of the first coupling member.

5. The foldable electronic device of claim 4, wherein the first link elastic member includes at least one of a disc spring and a coil spring.

6. The foldable electronic device of claim 4, wherein the first link cover includes:
a first inclined part (217_s1) facing one side of the first rail projection,
wherein a first curvature of the first inclined part is formed to be the same as a curvature of the first rail projection.

7. The foldable electronic device of claim 2, wherein the first arm member includes:
a first arm body (221_3);
a first arm part (221_1) formed in a first direction from the first arm body; and
a second arm part (221_2) formed in a second direction from the first arm body and fastened to the second link part, and
wherein the second arm part includes:
a second rail groove (221_2r1) formed on a first side surface of the second arm part;
and
a second rail projection (221_2r2) formed on a second side surface of the second arm part.

8. The foldable electronic device of claim 7, wherein the second link part includes:
a second link body (223_3);
a third sidewall (223_1) formed at a periphery of one side of the second link body, and in which a second link rail projection (223_1r) fastened to the second rail groove is formed; and
a fourth sidewall (223_2) formed at a periphery of an opposite side of the second link body, and in which a second link step (223_2r) fastened to the second rail projection is formed.

9. The foldable electronic device of claim 8, further comprising:
a second link cover structure (229assy) disposed to press a portion of the first arm member toward the first housing.

10. The foldable electronic device of claim 9, wherein the second link cover structure includes:
a second link cover (229) disposed on the first link connecting part, and disposed to cover a portion of the second rail projection;
a second coupling member (229_scr) fastened to the second link cover; and
a second link elastic member (229_el) disposed between the first link connecting part and one side of the second coupling member.

11. The foldable electronic device of claim 10, wherein the first link cover includes:
a second inclined part (229_s) covering one side of an upper portion of the second rail projection,
wherein a second curvature of the second inclined part is formed to be the same as a curvature of the second rail projection.

12. The foldable electronic device of claim 1, wherein the first arm member includes:
a first arm body (221_3);
a first arm part (221_1) formed in a first direction from the first arm body; and
a second arm part (221_2) formed in a second direction from the first arm body and fastened to the second link part, and
wherein the second arm part includes:
a second rail groove (221_2r1) formed on a first side surface of the second arm part;
and
a second rail projection (221_2r2) formed on a second side surface of the second arm part,
wherein the first link member includes:
a first link part (215) fastened to the first rotation member;
a second link part (221) fastened to the first arm member; and
a first link connecting part (215c) connecting the first link part and the second link part,
wherein the first link part includes:
a first link body (215_3);
a first sidewall (215_1) formed at a periphery of one side of the first link body, and in which a first link rail projection (215_1r) fastened to the first rail groove is formed; and
a second sidewall (215_2) formed at a periphery of an opposite side of the first link body, and in which a first link step (215_2r) facing one surface of the first rail projection is formed, and
wherein the second link part includes:
a second link body (223_3);
a third sidewall (223_1) formed at a periphery of one side of the second link body, and in which a second link rail projection (223_1r) fastened to the second rail groove is formed; and
a fourth sidewall (223_2) formed at a periphery of an opposite side of the second link body, and in which a second link step (223_2r) fastened to the second rail projection is formed.

13. The foldable electronic device of claim 12, further comprising:
a link cover structure (217assy) disposed to press a portion of the first rotation member and a portion of the first arm member toward the first housing,
wherein the link cover structure includes:
a link cover (217) disposed to cover a portion of the first rail projection and a portion of the second rail projection;
a coupling member (217_scr) fastened to the link cover; and
a first link elastic member (217_el) disposed between the link connecting part and one side of the coupling member,
wherein the first link cover includes:
a first inclined part (217_s1) facing one side of the first rail projection; and
a second inclined part (217_s2) facing one side of the second rail projection, and
a curvature of the first inclined part is different from a curvature of the second inclined part,
wherein the curvature of the first inclined part is greater than the curvature of the second inclined part.

14. The foldable electronic device of claim 1, wherein the first rotation member further includes:
a through-hole (211_2ph) that passes through the first side surface and the second side surface,
wherein the first link member includes:
a first link part (215) fastened to the first rotation member;
a second link part (223) fastened to the first arm member; and
a first link connecting part (215c) connecting the first link part and the second link part,
and
wherein the first link part includes:
a first link body (215_3);
a first sidewall (215_1) formed at a periphery of one side of the first link body, and in which a first link rail projection (215_1r) fastened to the first rail groove is formed; and
a second sidewall (215_2) formed at a periphery of an opposite side of the first link body, and in which a first link step (215_2r) facing one surface of the first rail projection is formed;
a first hole formed on one side of the first sidewall and a second hole formed in the second sidewall; and
a rail pin (250_pin) disposed to pass through the first hole, the second hole, and the through-hole.

15. The foldable electronic device of claim 1, comprising:
a fixing bracket (213) disposed in the hinge housing, and
wherein the fixing bracket includes:
a bracket body (213a3).
a first fixing rail groove (213a1) formed in the bracket body and coupled to a portion of the first rotation member (211); and
a second fixing rail groove (213a2) formed in the bracket body and coupled to a portion of the second rotation member (212).
